# EUROPEAN PATENT SPECIFICATION

(11) **EP 0 567 108 B1**
(45) Date of publication and mention of the grant of the patent: **23.07.1997**
(21) Application number: 93106530.4
(22) Date of filing: 22.04.1993
(51) Int. Cl.: H05B 41/29

(54) **A control circuit for a gas discharge lamp, particularly for use in motor vehicles**
Steuerungsschaltung für eine Entladungslampe, insbesondere in Fahrzeugen
Circuit de commande pour lampe à décharge, en particulier pour véhicule

(30) Priority: 23.04.1992 IT TO920355
(43) Date of publication of application: 27.10.1993
(73) Proprietor: MAGNETI MARELLI S.p.A., 20145 Milano (IT)
(72) Inventor: Nepote, Andrea, I-10131 Torino (IT)
(74) Representative: Quinterno, Giuseppe

(56) References cited:
- EP-A- 0 515 977
- DE-A- 4 132 299
- GB-A- 2 216 350
- US-A- 4 943 886
- US-A- 5 001 386

## Description

The present invention relates to a control circuit for a gas discharge lamp, particularly for use in headlights or spotlights of motor vehicles, of the kind defined in the preamble of claim 1.

DE-A-4 132 299 discloses a control circuit of this kind including supply means operable to provide a D.C. voltage between an output terminal and a ground conductor, an inverter circuit comprising a transformer, and an output stage in which the lamp and the associated starter means are disposed. Said output stage is not of the H-bridge type. No rectifier circuit is provided between the inverter circuit and the output stage, and the lamp is supplied in the operation with an alternating voltage provided at the secondary winding of the transformer of the inverter. Said secondary winding has one end coupled to the ground conductor through a current-sensing resistor.

Control circuits for gas discharge lamps are also known, in which an H-bridge output stage is connected between the output of d.c. voltage supply means and the earth conductor.

GB-A-2 216 350 discloses such a control circuit for a discharge lamp including aninput supply circuit which is coupled to an a.c. mains and provides two output d.c. voltages, between an output terminal and a ground conductor. This prior circuit also includes an output stage with a H-bridge configuration, in the central arm of which there are disposed the lamp and the starter circuitry associated therewith. This prior circuit further comprises a d.c. constant current generator which is supplied with the two d.c. voltages generated by the input supply circuit. Said d.c. current generator is connected in series with the H-bridge output stage and delivers a constant current to the lamp through said output stage.

In operation the terminals of the lamp are at a potential in general different from that of the ground conductor, with potential problems from the point of view of safety. Furthermore, the voltage applied to the lamp has a DC component and this can cause deionisation of the lamp.

The object of the present invention is to provide an improved control circuit for a gas discharge lamp of the type indicated above.

This object is achieved according to the invention by means of a control circuit as defined in claim 1.

In a first embodiment of the control circuit according to the invention the gas discharge lamp has a terminal safely maintained at the ground potential. This brings evident advantages from the point of view of safety, as well as the fact that the lamp is subjected in use to a voltage with a practically nil average component, and this avoids deionisation thereof.

In a second embodiment the terminal of the output stage which in the operation reaches the highest potential is connected to the earth conductor.

Further characteristics and advantages of the invention will become apparent from the detailed description which follows, made with reference to the attached drawings, provided purely by way of non-limitative example, in which:
Figure 1 is an electrical diagram, partly in block diagram form of a first embodiment of the gas discharge lamp control circuit according to the invention;
Figure 2 is a diagram of a second embodiment of the control circuit according to the invention;
Figure 2A is a series of diagrams which show, as a function of time plotted on the abscissa, the variation of several signals generated during operation of control circuit according to Figure 2;
Figures 3 and 4 show further diagrams of variant embodiments of the control circuit according to the invention;
Figure 4A is a series of diagrams which show, as a function of time plotted on the abscissa, the variation of several signals generated in operation of the control circuit according to Figure 4; and
Figures 5 to 9 show further variant embodiments of the control circuit according to the invention.

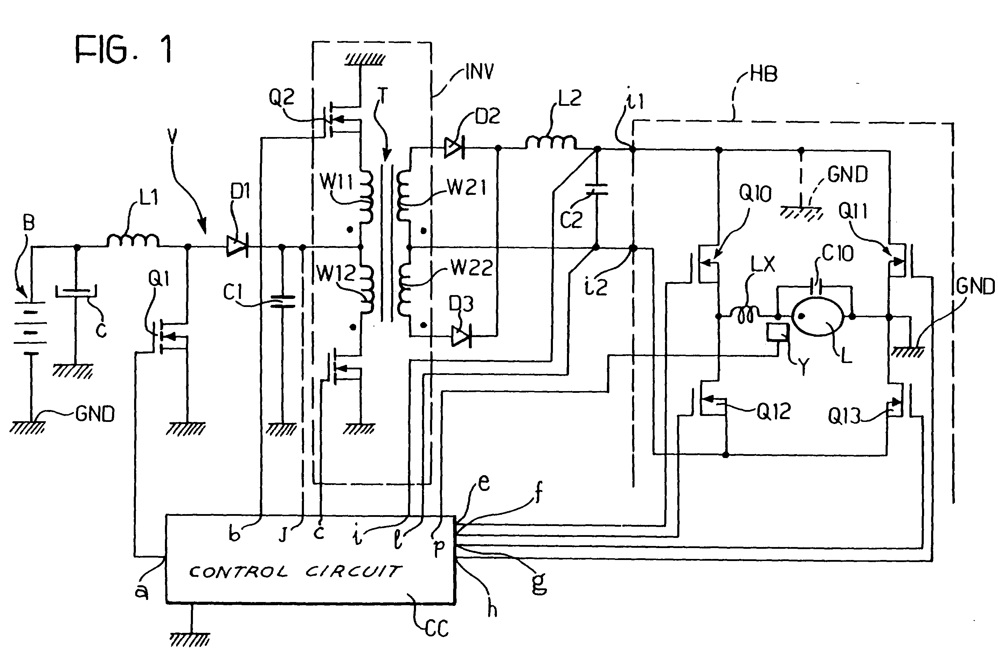

Figure 1 shows the circuit structure of a first type of control circuit for a gas discharge lamp, according to the invention.

In this Figure the reference numeral B indicates the battery on board a motor vehicle, which has a negative pole connected to a ground conductor GND and a positive pole connected to a voltage lifter circuit generally indicated V. This circuit includes an inductor L1 which has one end connected to the positive pole of the battery B and the other end connected to the anode of the diode D1. This letter has a cathode connected to one terminal of a capacitor C1, the other terminal of which is connected to the ground conductor.

The voltage lifter circuit V further includes an electronic switch Q1, for example a MOS transistor, interposed between the anode D1 and the ground conductor. This electronic switch has a control input connected to an output 'a' of a control circuit generally indicated CC.

An electrolytic capacitor C is connected between the positive pole of the battery B and the ground conductor.

The voltage lifter circuit V is of the type known as a "voltage step-up" circuit. In use, a square wave signal is applied to the control input of the switch Q1 causing it alternatively to conduct and be switched off. When Q1 is conductive a current flows through the inductor L1 and Q1. When Q1 is turned off, the inductor L1 causes a current to flow in the capacitor C1 which charges it. Following successive switchings of Q1 the voltage across the terminals of C1 rises progressively, by degrees, and can rise to values substantially greater than the voltage of the battery B.

The output of the voltage lifter circuit V is connected to the input of an inverter INV which includes a transformer T.

In the type of circuit structure shown in Figure 1 the inverter INV is of the push-pull type. It includes the transformer T which has two primary half-windings, W11, W12 having a central terminal or tapping which is connected to the output of the voltage lifter circuit V. The end terminals of the primary windings W11, W12 are connected to the ground conductor GND via two electronic switches Q2, Q3 also, for example, constituted by MOS type transistors. The electronic switches Q2, Q3 have respective control inputs connected to outputs b and c of the control circuit CC.

The transformer T further has two secondary half windings W21, W22 which have a central tap or terminal connected to an input terminal i2 of a H-bridge circuit generally indicated HB. The end terminals of the secondary winding of the transformer T are connected to the anodes of two diodes D2, D3, the cathodes of which are both connected to the other input terminal i1 of the bridge circuit HB via an inductor L2. A capacitor C2 is connected between the input terminals i1 and i2 of the bridge circuit HB.

In operation the inverter INV converts the DC voltage applied to its input by the voltage lifter circuit V into an alternating voltage which is rectified by two diodes D2, D3 that together form a double half-wave rectifier.

The inductor L2 and the capacitor C2 together form a filtering circuit intended to limit the "ripple" of the DC voltage which is applied between the input terminals i1 and i2 of the bridge circuit HB.

It is to be noted that the secondary half windings W21, W22 of the transformer T are decoupled from the ground conductor. Consequently the DC voltage applied between the terminals i1, i2 of the bridge circuit HB is not tied to the ground potential.

In a manner known per se, the bridge circuit HB includes four electronic switches Q10, Q11, Q12 and Q13, also constituted for example by MOS type transistors.

The switches Q10 and Q11 have a respective first terminal connected to the input terminal i1 of the bridge circuit, and another terminal connected to a central branch in which the gas discharge lamp L is connected with an associated starter unit LC comprising a choke LX in series with the lamp, and a capacitor C10 in parallel with the lamp.

This unit has resonant frequency of the order of 400 KHz and the inductor LX can be made as an air inductor.

The electronic switches Q12 and Q13 are respectively interposed between Q10 and Q11 and the input terminal i2 of the bridge circuit HB.

The control inputs of the electronic switches Q10-Q13 are connected to corresponding outputs e-h of the control circuit CC.

The control circuit CC has two inputs i, 1, connected to the terminals i1, i2 of the output stage HB. Due to this connection the control circuit CC is able to detect the voltage across the terminals of the lamp L. The circuit CC has a further input p connected to a sensor Y operable to detect the current flowing through the lamp L. On the basis of this information the control circuit is able, in a manner known per se, to detect the power delivered, in use, to the said lamp.

As is clearly seen in Figure 1, the lamp has a terminal connected to the ground conductor GND.

The general circuit structure described above with reference to Figure 1 makes it possible, in particular, to have two different embodiments in which, as will be seen, the adjustment of the power delivered to the lamp L is achieved by acting on the voltage lifter circuit V and, respectively, on the inverter INV.

In the first embodiment the control circuit CC applies to the switch Q1 of the voltage lifter circuit V a square wave control signal at a rather high frequency f (for example 100 KHz) and with a duty cycle variable in dependence on the power to be delivered to the lamp L. In this embodiment the transformer T of the inverter INV is formed in such a way as to present a turns ratio K for example equal to one, and the switches Q2 and Q3 are controlled with respective square wave signals in antiphase at high frequency, for example equal to half the control frequency of Q1, for the purpose of ensuring that the current flowing in W11 and W12 respectively in the conduction periods of Q2 and Q3 respectively have the same waveform. Nevertheless the control frequency of Q2 and Q3 can, in the limit, even be somewhat higher than the frequency with which Q1 is controlled. In any case the duty cycle of the control signals of Q2 and Q3 is conveniently fixed and equal to about 0.5 or slightly less.

In the first embodiment described above the inductor L2 and the capacitor C2 have relatively modest inductance and capacitance values in that they must filter a relatively modest "ripple".

The switches Q10-Q13 of the bridge circuit HB are controlled with low frequency square wave signals (of the order of 300-400 hertz). Obviously, as is generally the case in H-bridges, the control signal applied to the switches Q10-Q13 are such as to render opposite pairs of such switches alternatively conductive, and thus when Q10 and Q13 are conductive Q11 and Q12 are switched off and vice versa.

Since, as mentioned previously the inverter INV is made to operate at high frequency, its dimensions, and in particular those of the transformer T, can be extremely small.

In the second embodiment the control circuit CC controls the switch Q1 with a square wave signal having a constant high frequency and a duty cycle variable such as to maintain the voltage across the terminals of the capacitor C1 substantially constant, and thus the voltage applied To the central tape of the primary winding of the transformer T of the inverter INV. For this purpose the control circuit CC conveniently has a further input j connected to the side of the capacitor C1 which is connected to the central tap of the said transformer, in order to be able to derive the local voltage on this capacitor. In this embodiment the voltage lifter circuit V as well as raising the voltage, works substantially as a stabilised supply. The adjustment of the power delivered to the lamp L is effected by the control circuit CC by modifying the duty cycle of the square wave control signals applied to the switches Q2 and Q3 of the inverter INV. This duty cycle will however be less than or equal to 0.5. Since the adjustment of the power delivered to the lamp takes place by modifying the duty cycle of the signals applied to Q2 and Q3, the non-conduction times of such switches can become significant, so that in this case the filtering action effected by L2 and C2 becomes more important.

The transformer T of the inverter INV in this case conveniently raises the voltage by having a co-efficient K greater than unity.

A further embodiment, not illustrated, is obtainable by eliminating from the circuit diagram of Figure 1 the voltage lifter circuit V (L1, Q1, D1) and therefore by connecting the battery B directly to the inverter INV. In this case the transformer T must be made in such a way as to allow a greater voltage lifting for the purpose of being able to apply an adequate DC voltage to the bridge circuit HB. In this embodiment the adjustment of the power delivered to the lamp L necessarily takes place by modulating the duty cycle of the square wave signals applied to the switches Q2 and Q3 of the inverter.

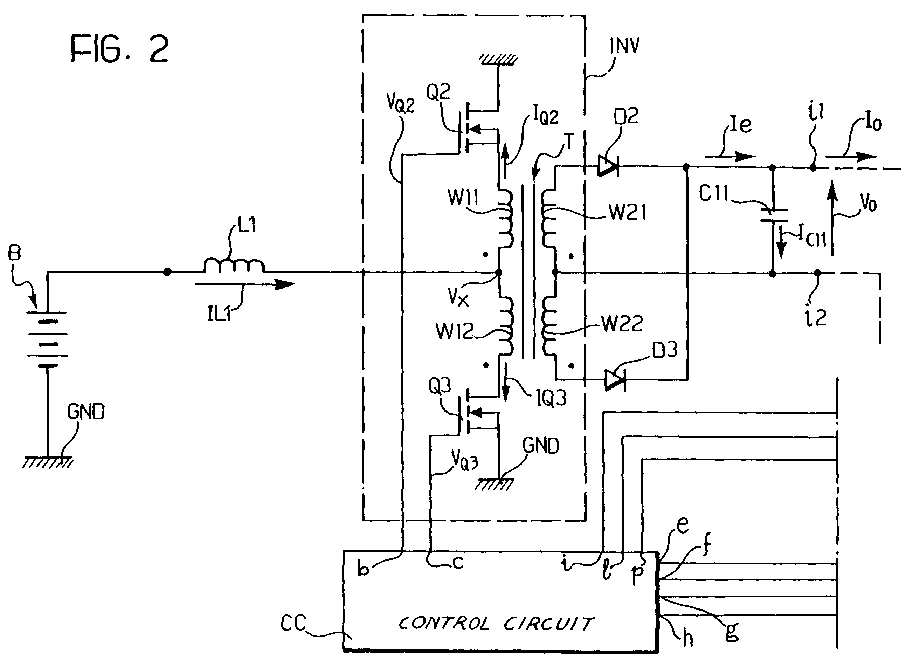

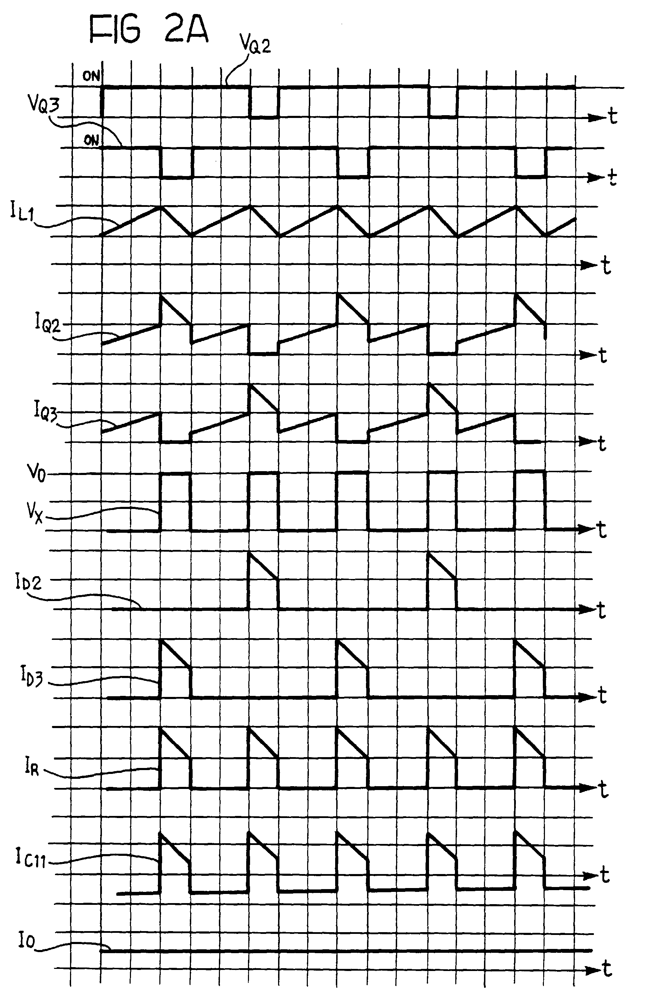

In Figure 2 there is shown a circuit diagram of a further embodiment of a control circuit according to the invention. In this Figure the parts and components already described hereinabove have been given the same alphanumeric references.

In the embodiment of Figure 2 the battery B is connected to the central tap of the primary winding of the transformer T via an inductor L1. With respect to the version according to Figure 1, Q1, D1 and C1 have been omitted. The circuit structure of the inverter INV and of the associated double half wave rectifier D2, D3 remains unchanged. Downstream from this double half wave rectifier, in parallel with the input terminals i1, i2 of the H-bridge circuit, is a capacitor C11. This capacitor, together with the input inductor L1 and by the effect of a suitable control of the switches Q2 and Q3 of the inverter INV, forms a voltage lifter circuit which produces an output DC voltage V₀ that is much higher than the battery voltage B, sufficient for controlling the lamp L and not tied to the potential of the ground conductor GND. This, therefore, is an embodiment in which the voltage lifter circuit and the inverter are in fact integrated together.

The transformer T can have a turns ratio K equal to one and the associated electronic switches Q2 and Q3 are controlled with respective square wave signals having a duty cycle greater than or equal to 0.5.

It is to be noted that in the embodiment according to Figure 2 the switches Q2 and Q3 cannot be simultaneously turned off, otherwise the voltage Vₓ between the central tap of the primary of the transformer T and ground could reach unacceptably high values. The control signals V_{Q2} and V_{Q3} applied to Q2 and Q3 conveniently have a waveform of the type shown in Figure 2A. When the said signals are such as to render Q2 and Q3 simultaneously conductive the currents flowing in the primary half windings W11, W12 (conveniently wound in opposite senses) do not in fact give rise to any magnetic flux in the core of transformer T. When one of the two switches Q2, Q3 is turned off, the current flowing in the primary half winding associated with the other switch doubles as is shown by the waveform of the current I_{Q2} and I_{Q3} of Figure 2A. Thus, for example, when Q2 is turned off, the current I_{Q3} doubles: equal and opposite voltages appear on the secondary half windings W21, W22 of the transformer T, of which that on W21 causes circulation of a current which passes through D2 (see current I_{D2} of Figure 2A) whilst the voltage on W22 does not succeed in causing current to flow due to the blocking action of D3 (see the current I_{D3} in Figure 2A).

A pulsed current I_{R} therefore flows from the cathodes of D2 and D3 the variation of which is qualitatively illustrated in Figure 2A. The capacitor C11 is traversed by a current I_{C11} and a DC current I₀ is delivered to the H-bridge as is shown in Figure 2A.

In the embodiment of Figure 2 also, the inverter INV can be made with extremely small dimensions due to the high control frequency.

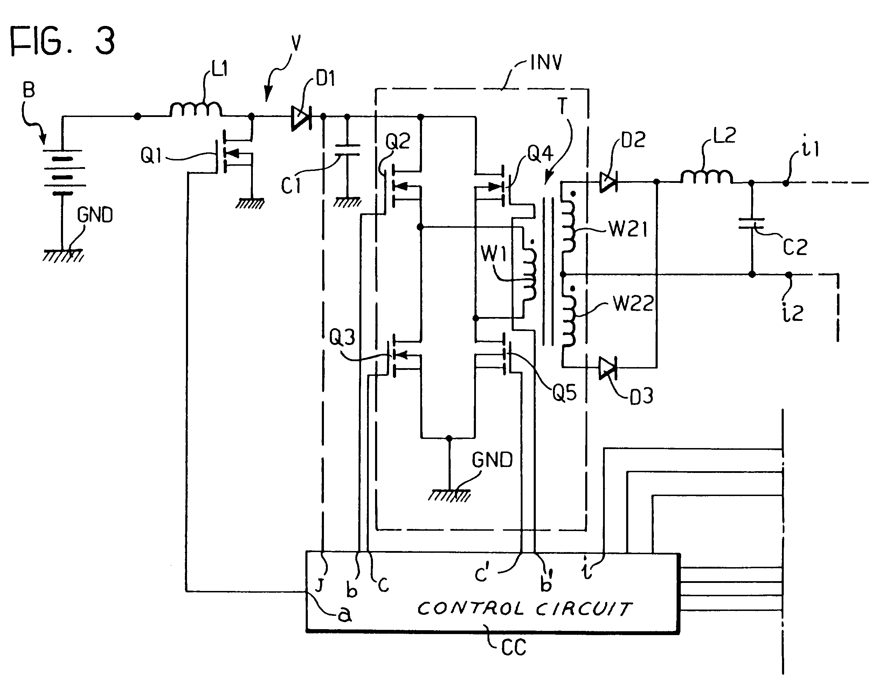

In Figure 3 there is shown another possible circuit structure for a control circuit according to the invention. In this Figure the parts and components already described hereinabove have been again given the same alphanumeric references.

With respect to the circuit structure of Figure 1, that shown in Figure 3 differs by the different internal structure of the inverter INV. In the case of Figure 3 the inverter has an H-bridge-type control circuit having four electronic switches Q2-Q5. The transformer T of this inverter has a single primary winding W1 in the central branch of the H-bridge circuit formed by Q2-Q5. The secondary winding of T is, however, also in this case sub-divided into two half windings W21 and W22 with which are associated respective rectifier diodes D2, D3 connected in such a way as to form overall a double half wave rectifier.

The electronic switches Q2-Q5 are connected to corresponding outputs b, c, b', c' of the control circuit CC.

In the case of the circuit structure shown in Figure 3 there are also two possible ways of achieving adjustment of the power delivered to the lamp L.

The first way of achieving adjustment is by modulating the duty cycle of the fixed frequency square wave signal applied to the control input of Q1. In this case the electronic switches Q2-Q5 of the inverter INV are controlled with a fixed duty cycle substantially equal to 0.5. The transformer T can have a turns ratio K equal to 1. Moreover the inductance of L2 and the capacitance of C2 can be relatively modest in that the "ripple" to be filtered is small.

The second way of achieving adjustment of the power delivered to the lamp L provides for modulation of the duty cycle of the square wave signals controlling the switches Q2-Q5 of the inverter INV. In this case the switch Q1 of the voltage lifter V is controlled with a duty cycle varied solely in such a way as to ensure that the voltage across the terminals of the capacitor C1 is maintained substantially constant. The voltage lifter circuit V thus operates in this case as a stabilised supply.

A further embodiment of the control circuit according to the invention can be obtained from the circuit diagram of Figure 3 by eliminating the voltage lifter circuit V, and thus directly connecting the supply B to the inverter INV. It will be appreciated that in this case the transformer T must be dimensioned in such a way as to ensure the increase in voltage necessary to provide the final stage HB with an adequate DC voltage.

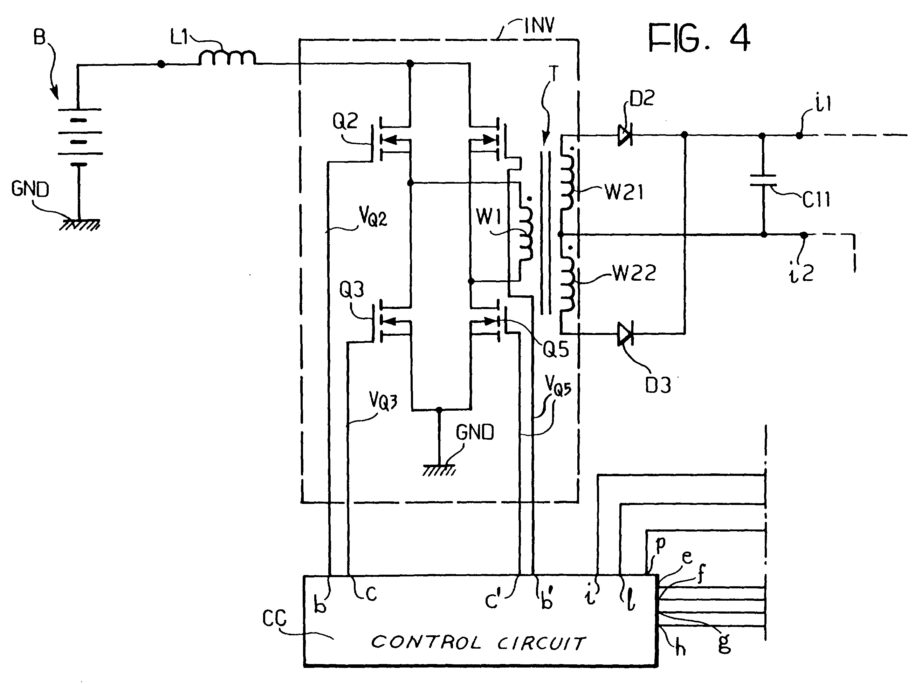

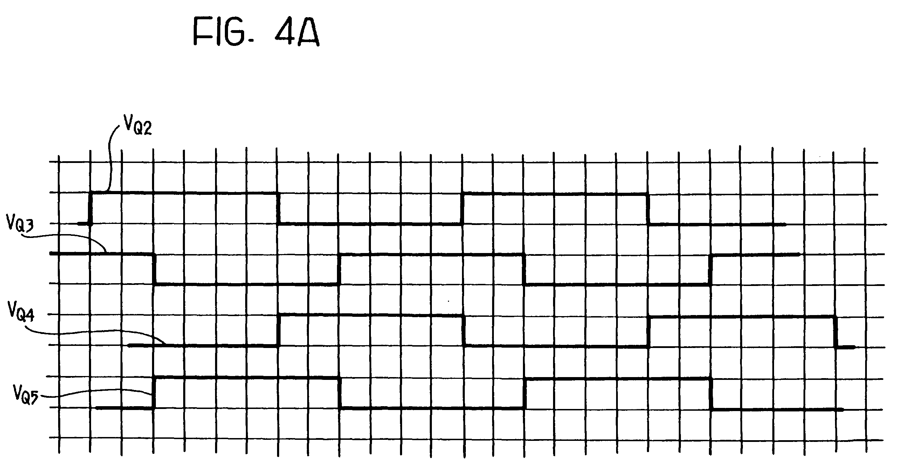

In Figure 4 there is shown a further variant embodiment of the circuit according to the invention, which corresponds to the diagram of the embodiment shown in Figure 2 but with an internal structure of the inverter INV corresponding to that described above with reference to Figure 3. This, thus, is a version in which the inverter INV is integrated in a voltage lifter of step-up type including the inductor L1 and the capacitor C11.

The transformer T of the inverter INV has a turns ratio K conveniently equal to one and adjustment of the power delivered to the lamp L takes place via the control signals applied to the inverter switches Q2-Q5. Conveniently these signals have a waveform of the type shown for example in Figure 4A. When the signals V_{Q2} and V_{Q3} are both at level "1", Q2 and Q3 are conductive, whilst Q4 and Q5 are turned off. In this condition a current flows through the inductor L1, whilst the primary winding W1 of the transformer T has no current flowing in it. When, subsequently, Q3 is turned off and Q5 is rendered conductive, the current flows in the primary winding W1 of T and the capacitor C11 is charged. Subsequently, Q4 and Q5 are rendered conductive, whilst Q2 and Q3 are turned off: in this condition a current again flows through L1. Subsequently the turning off of Q5 and the turning on again of Q3 starts another charging phase of C11.

As can be established by observing Figure 4A, the signals V_{Q2} and V_{Q4} are complimentary to one another as are the signals V_{Q3} and V_{Q5}. Conveniently the adjustment of the power transferred to the lamp L can be achieved simply by varying the phase shift of the pair of signals V_{Q2}, V_{Q4} with respect to the pair of signals V_{Q3}, V_{Q5}.

The embodiment of Figure 4 has the advantage, over that of Figure 2, that when current flows through the inductor L1, the primary of the transformer T of the inverter is not involved in the passage of current. There is therefore a lower heat dissipation which avoids any risk of possible saturation of the transformer core.

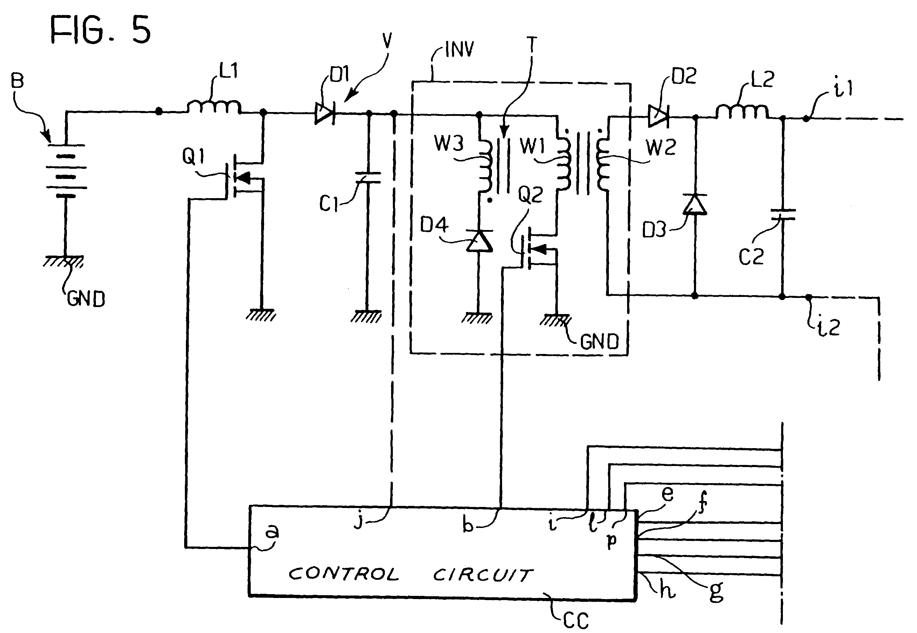

In Figure 5 is shown a further variant embodiment of the circuit according to the invention. This embodiment is analogous to that shown in Figures 1 and 3, but differs from them substantially due to the different structure of the inverter INV and associated rectifiers D2, D3.

In the embodiment according to Figure 5 the inverter INV is of "forward" type and comprises a transformer T with a primary winding W1 which has a terminal connected to the output of the voltage lifter circuit V and the other terminal connected to an electronic switch Q2. The secondary winding W2 of the transformer T is connected to two rectifier diodes D2, D3 connected in the manner illustrated so as to constitute a half wave rectifier.

The primary winding W1 of the transformer T is associated with a further winding W3 connected in series with a diode D4 in a circuit branch connected in parallel to the circuit branch which comprises W1 and W2. W3 and D4 serve to allow the return flow of the magnetisation current of the primary winding W1 of the transformer T each time that Q2 is turned off.

The circuit structure shown in Figure 5 has the advantage over the arrangement of Figures 1 and 3 that it requires a single electronic switch in the inverter INV. This involves a further simplification of the control circuit CC.

The circuit structure of Figure 5 also lends itself to two different structural embodiments.

In a first embodiment the adjustment of the power transferred to the lamp L is achieved by modulating the duty cycle of the control signal applied to the switch Q1 of the voltage lifter circuit V. In the second embodiment adjustment of the power transferred to the lamp L is achieved by modulating the duty cycle of the control signal applied to the switch Q2 of the inverter INV. In this case the voltage lifter circuit V acts as a voltage stabiliser, and the duty cycle of the signal applied to Q1 is varied, when necessary, in such a way that the voltage lifter circuit V provides at its output a substantially constant voltage.

Relative to the arrangement according to Figures 1 and 3, the inductor L2 and the capacitor C2 of the circuit of Figure 5 have inductance and capacitance values which are respectively higher in that they are called on to filter the DC voltage delivered by a rectifier during only one half cycle.

A further embodiment of the circuit according to the invention can be obtained from the circuit structure shown in Figure 5 by eliminating the voltage lifter circuit V, and thus by directly coupling the battery B to the input of the inverter INV. Naturally, in this case, the transformer T of the inverter must be dimensioned in such a way as to be able to achieve the necessary increase in voltage.

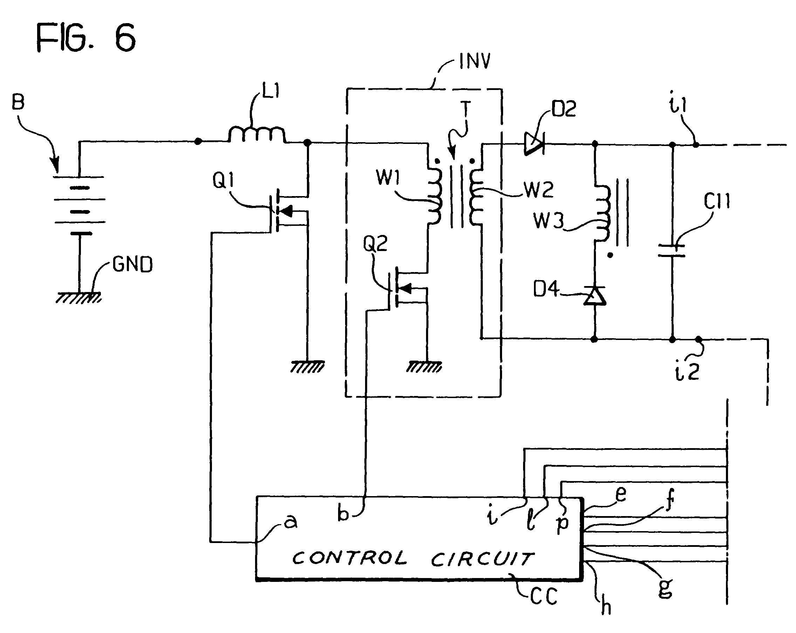

Figure 6 shows a further embodiment of the circuit according to the invention. This embodiment is conceptually similar to those shown in Figures 2 and 4 and provides for integration of the inverter INV into a voltage lifter circuit which includes the input inductor L1 and the output capacitor C11.

In Figure 6 the inverter INV includes a transformer T with a primary winding W1 disposed between the inductor L1 and an electronic switch Q2 connected to ground GND. A further electronic switch Q1 is connected in parallel with the circuit branch that includes W1 and Q2.

The secondary winding W2 of T is connected to a rectifier diode D2. In parallel with the circuit branch comprising W2 and D2 is connected a circuit branch comprising a further winding W3 in series with the diode D4. The circuit branch W3-D4 has the same function as the corresponding circuit branch in the embodiment illustrated in Figure 5.

The control circuit CC of Figure 6 is conveniently arranged to provide the control input of Q1 and Q2 with square wave control signals which are complementary to one another so that when Q1 is conductive Q2 is turned off. In this way no current flows in the primary winding W1 of the transformer when the inductor L1 is loaded.

Adjustment of the power delivered to the lamp L is achieved by modulating the duty cycle of the wave form of the control signals of Q1 and Q2. By setting the convenient condition explained above that the control signals of Q1 and Q2 be complementary to one another, the duty cycle of the signal applied to Q1 will in general be greater or equal to 0.5 whilst the duty cycle of the signal applied to Q2 will in general be less than or equal to 0.5.

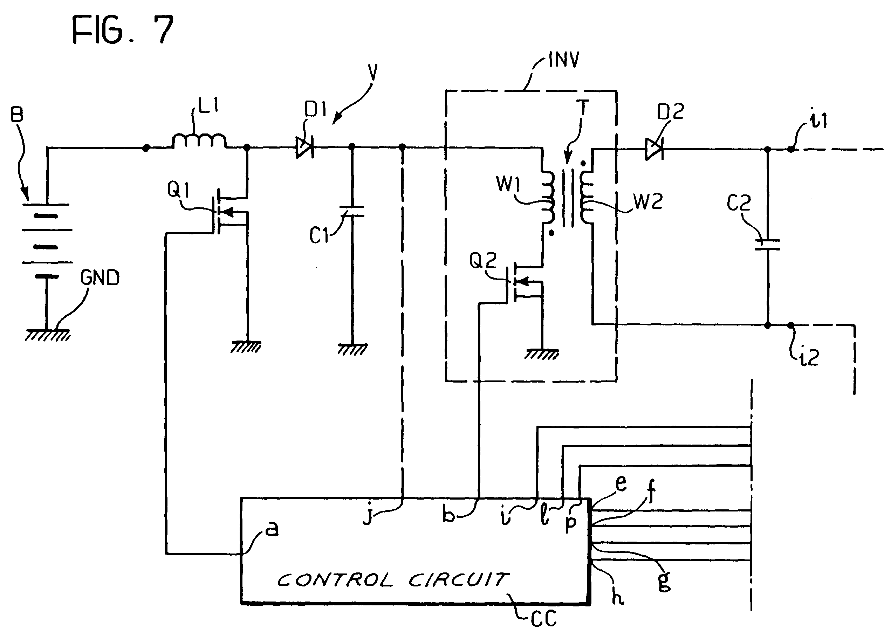

A further embodiment is shown in Figure 7, in which the parts and components already described have again been allocated the same alphanumeric references. The circuit diagram of Figure 7 is conceptually similar to those shown in Figures 1, 3 and 5, and differs from these substantially in the following aspects.

The inverter INV is in this case of "fly-back" type and comprises a transformer T with a primary winding connected between the output of the voltage lifter circuit V and an electronic switch Q2. The secondary winding W2 of the transformer is connected to a rectifier diode D2. A capacitor C2 is connected in parallel with the circuit branch comprising W2 and D2.

The circuit of Figure 7 lends itself to two embodiments in relation to the adjustment of the power delivered to the lamp L.

In a first embodiment the adjustment is effected by modulating the duty cycle of the square wave signal applied to the control input of the switch Q1 of the voltage lifter circuit V just as is provided for the embodiments of Figures 1, 3 and 5. In this case the transformer T conveniently has a turns ratio K equal to one and the associated electronic switch Q2 is controlled with a square wave signal having a constant duty cycle substantially equal to 0.5.

The adjustment of the power delivered to the lamp L can however also be achieved in this case by modulating the duty cycle of the control signal applied to the control input of the switch Q2 of the inverter. In this case the voltage lifter circuit V is again controlled in such a way that it functions substantially as a stabilised supply and therefore the duty cycle of the signal applied to Q1 is simply varied in such a way that the voltage across the terminals of the capacitors C1 is maintained substantially constant. The transformer T in this case can have a turns ratio greater than or equal to unity.

A further embodiment of the control circuit according to the invention can be obtained from the circuit diagram of Figure 7 by eliminating the voltage lifter circuit V and therefore coupling the battery B directly to the input of the inverter INV. Obviously, in this case, the transformer T of the inverter must be dimensioned in such a way as to allow an adequate increase in voltage. Moreover, the adjustment of the power delivered to the lamp L can only take place by modulation of the duty cycle of the signal which controls the switch Q2 of the inverter.

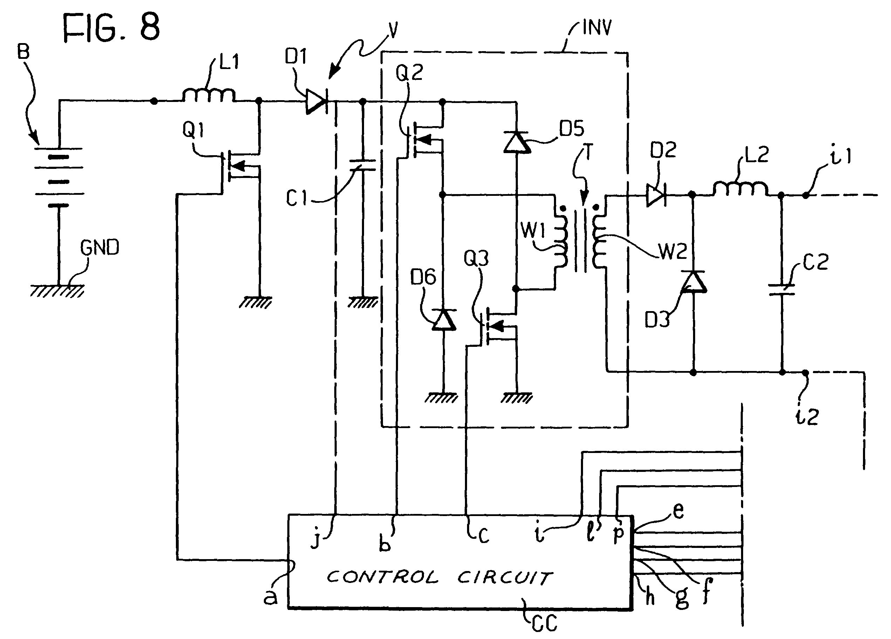

Figure 8 shows a further embodiment of a circuit according to the invention similar to that shown in Figure 5, from which it differs by a different structure of the inverter INV.

In Figure 8 the parts and components already described with reference to Figure 5 have again been allocated the same alphanumeric references.

The inverter INV of the circuit of Figure 8 is of the "forward" type and includes a transformer T with a primary winding W1 disposed between two electronic switches Q2, Q3 in a circuit branch interposed between the output of the voltage lifter circuit V and ground GND.

Two diodes D5 and D6 are disposed in the manner illustrated between one terminal of the primary winding W1 and the output of the voltage lifter circuit V and, respectively, between the other terminal of W1 and ground GND.

The control circuit CC of Figure 8 is arranged to apply to the control inputs of Q2 and Q3 square wave control signals in phase with one another. When Q2 and Q3 are simultaneously conductive there is a transfer of energy from primary winding W1 to secondary winding W2 of the transformer. When Q2 and Q3 are simultaneously turned off the magnetisation current of the winding W1 can flow back through the diodes D6 and D5.

As far as the remainder of the circuit shown in Figure 8 is concerned, this operates substantially as the circuit shown in Figure 5. In this case also adjustment of the power transferred to the lamp L can be achieved by modulation of the duty cycle of the signal applied to the switch Q1 of the voltage lifter circuit V or else by modulating the duty cycle of the control signal applied to the switches Q2 and Q3 of the inverter.

A further embodiment of the circuit according to the invention can be obtained from the circuit diagram of Figure 8 by eliminating the voltage lifter circuit V and therefore by connecting the battery B directly to the input of the inverter INV. It will be understood that in this case the transformer T must be dimensioned in such a way as to provide an adequate voltage increase.

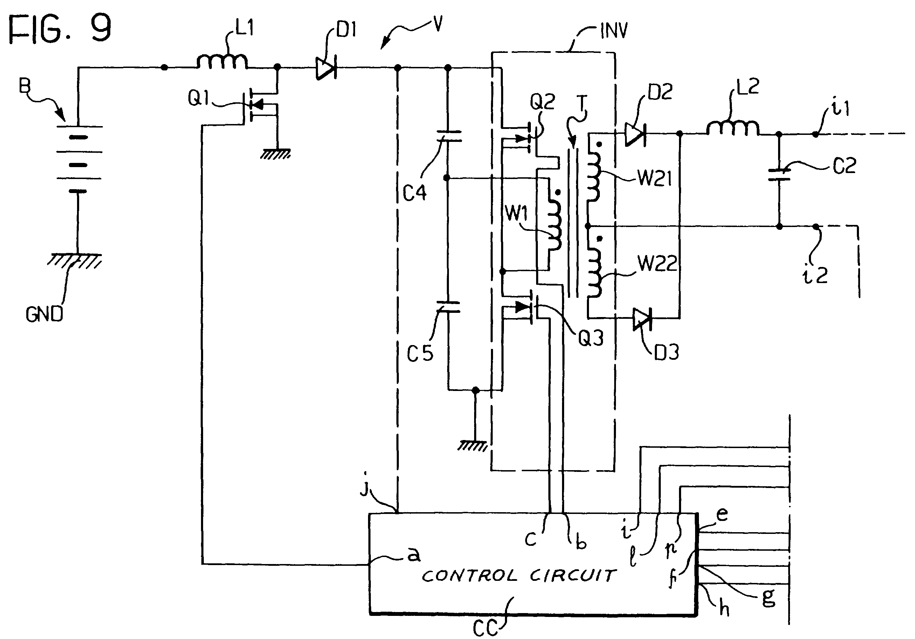

Figure 9 shows a further possible circuit structure for a control circuit according to the invention, conceptually similar to that shown in Figure 3 from which it differs by a different structure of the inverter INV and by the fact that the capacitor C1 of the voltage lifter circuit V has been replaced by two capacitors C4, C5 of the same capacitance as one another, connected between the cathode of D1 and ground GND. The inverter INV of Figure 9 is of the half-bridge type and comprises a transformer T with a primary winding W1 which has a terminal connected to the junction between C4, C5 and the other terminal connected to the junction between two electronic switches Q2 and Q3. The transformer T has two secondary half-windings W21, W22 with a central tap connected to the input terminal of the output stage HB, and with the end terminals connected to the anodes of two diodes D2, D3 the cathodes of which are connected to the inductor L2 of filtering circuit L2-C2.

The electronic switches Q2 and Q3 are controlled by respective anti-phase square wave signals.

Adjustment of the power delivered to the lamp L can be achieved by modulating the duty cycle of the square wave signal applied to the input terminal of the switch Q1 of the voltage lifter circuit V, or else by modulating the duty cycle of the control signals applied to Q2 and Q3. In this second case the duty cycle of the signal applied to Q1 is varied in such a way that the overall voltage across the terminals of the series C4 and C5 is maintained substantially constant.

A further embodiment of the circuit according to the invention can be derived from circuit diagram of Figure 9 by eliminating L1, Q1 and D1, and thus by directly connecting the battery B to the input of the inverter INV. In this case the transformer T must obviously be dimensioned in such a way as to ensure an adequate voltage increase.

In all the variant embodiments described above the circuit according to the invention allows a terminal of the lamp L to be connected to ground, with consequent advantages from the point of view of safety. Moreover, as has already been indicated hereinabove, this makes it possible to avoid the risk of deionisation of the lamp.

The undulation or "ripple" of the current drawn from the battery B is in each case very low, in particular, in embodiments in which the battery B is connected to an input choke.

The entire lamp control circuit can be made in such a way that it has extremely small dimensions, so that it can be fitted within a headlamp or spot lamp of a motor vehicle. This makes it possible to avoid the necessity for high voltage supply cables in the motor vehicle engine compartment.

To light the lamp L, in place of a resonant starter circuit such as that shown in Figure 1, a pulse transformer (Tesla transformer) can naturally be used (in a manner known per se) by providing in this case, in a known way, suitable overvoltage and switching means such as gas dischargers.

As an alternative in all the above described embodiments the terminal i1 of bridge circuit HB, which in the operation reaches the highest potential, is connected to the earth conductor, as shown in dashed lines in Figure 1. In this case the lamp is no longer connected to earth.

## Claims

1. A control circuit for a gas discharge lamp (L) particularly for use in motor vehicles, comprising
supply means (B, V) operable to provide a DC voltage between an output terminal and a ground conductor (GND); and
an output stage (HB) connected to the DC voltage generator means, and in which the lamp (L) and associated reactive starter means (L, C10) are disposed; said output stage (HB) being connected to said ground conductor (GND),
between the said DC voltage supply means (B, V) and the said output stage (HB) there being interposed an intermediate stage including an inverter (INV) comprising a transformer (T) with a primary and a secondary winding (W11, W12, W1; W21, W22, W2);
characterised in that
the secondary winding (W21, W22, W2) of said transformer (T) is decoupled from said ground conductor (GND) and is connected to a rectifier circuit (D2, D3) likewise decoupled from the ground conductor (GND);
said output stage (HB) having a H-bridge configuration with the input terminals (i1, i2) connected to the output of said rectifier circuit (D2, D3); the lamp (L) and the associated starter means (L, C10) being disposed in the central arm of said output stage (HB);
said output stage (HB) being connected to the ground conductor (GND) in such a way that in operation the voltage across the lamp (L) has, with respect to said ground conductor (GND), a non-positive average value.

2. A circuit according to Claim 1, characterised in that the lamp (L) has a terminal connected to the ground conductor (GND).

3. A circuit according to Claim 1, characterised in that the terminal of the output stage (HB) which in the operation reaches the highest potential is connected to said ground conductor (GND).

4. A circuit according to any of Claims 1 to 3, characterised in that the said intermediate stage includes an inverter (INV; Fig. 1, Fig. 2) of push-pull type including a transformer (T) with two primary half-windings (W11, W12) having a central terminal connected to the output of the said voltage supply means (B,V) and end terminals connected to the said ground conductor (GND) through first and second electronic switches (Q2, Q3) respectively, and with two secondary half-windings (W21, W22) having a central terminal connected to an input terminal (i2) of the said output stage (HB) and end terminals connected to the other input terminal (i1) of the output stage (HB) by means of the said rectifier circuit (D2, D3).

5. A circuit according to Claim 4, in which the said voltage supply means (B,V) comprise a voltage lifter circuit (V) including an electronic switch (Q1) intended to be controlled in an on/off manner in such a way that the voltage provided at the output of the said voltage lifter circuit (V) depends on the average conduction time of the said electronic switch (Q1), and in which there are provided means (CC) for controlling the power delivered to the lamp (L);
characterised in that the said control means comprise a control circuit (CC) operable to apply to the control input of the said electronic switch (Q1) a control signal of fixed frequency and variable duty cycle in dependence on the power to be delivered to the lamp (L).

6. A circuit according to Claim 5, characterised in that it includes control means (CC) operable to apply to the control inputs of the electronic switches (Q2, Q3) of the said inverter (INV) respective control signals of fixed frequency and constant duty cycle.

7. A circuit according to Claim 4, in which the said voltage supply means (B,V) include a voltage lifter circuit (V) having an electronic switch (Q1) intended to be controlled in an on/off manner in such a way that the voltage provided from the said voltage lifter circuit (V) depends on the average conduction time of the said electronic switch (Q1),
characterised in that it includes control means (CC) operable to apply to the electronic switch (Q1) of the voltage lifter circuit (V) a control signal having a fixed frequency and variable duty cycle in such a way as to maintain the voltage delivered from the said voltage lifter circuit (V) substantially constant.

8. A circuit according to Claim 7, in which there are provided means (CC) for controlling the power delivered to the lamp (L),
characterised in that the said control means include a control circuit (CC) operable to apply to the control inputs of the electronic switches (Q2, Q3) of the said inverter (INV) respective fixed frequency control signals having a duty cycle which is variable as a function of the power to be delivered to the lamp (L).

9. A circuit according to Claim 4, characterised in that the said voltage supply means (B) comprise a source of DC voltage (B) and in that the said intermediate stage includes an inverter (INV, Figure 2) of push-pull type including a transformer (T) with two primary half windings (W11, W12) having a central terminal connected to the said power source (B) via an inductor (L1) and two end terminals connected to the ground conductor (GND) via first and second electronic switches (Q2, Q3), respectively, and with two secondary half windings (W21, W22) having a central terminal connected to an input terminal (i2), of the output stage (HB) and two end terminals connected to the said rectifier circuit (D2, D3); a capacitor (C11) being connected between the input terminals (i1, i2) of the said output stage (HB).

10. A circuit according to Claim 9, characterised by the fact that it includes a control circuit (CC) operable to apply to the control inputs of the electronic switches (Q2, Q3) of the inverter (INV) respective square wave control signals of fixed frequency and variable duty cycle such as never to switch off the said electronic switches (Q2, Q3) simultaneously; the duty cycle of the said signals (V_{Q2}, V_{Q3}) being variable as a function of the power to be delivered to the lamp (L).

11. A circuit according to any of Claims 1 to 3, characterised by the fact that the said inverter (INV) includes an H-bridge circuit (Figures 3, 4) the input terminals of which are connected to the output of the said voltage supply (B, V) and the central arm of which has a primary winding (W1) of a transformer (T) which has two secondary half windings (W21, W22) having a central terminal connected to an input terminal (i2) of the output stage (HB) and end terminals connected to the said rectifier circuit (D2, D3), the output of which is connected to the other input terminal (i1) of the output stage (HB).

12. A circuit according to Claim 11, in which the said voltage supply means (B,V) include a voltage lifter circuit (V) including an electronic switch (Q1) intended to be controlled in an on/off manner in such a way that the voltage provided at the output of the said voltage lifter circuit (V) depends on the average conduction time of the said electronic switch (Q1), and in which there are provided control means (CC) for controlling the power delivered to the lamp (L);
characterised in that the said control means comprise a control circuit (CC) operable to apply to the control input of the said electronic switch (Q1) a fixed frequency control signal having a duty cycle variable as a function of the power to be delivered to the lamp (L).

13. A circuit according to Claim 12, characterised in that it includes control means (CC) operable to apply to the control inputs of the electronic switches (Q2, Q3, Q4, Q5) of the said inverter (INV) respective fixed frequency constant duty cycle control signals.

14. A circuit according to Claim 11, in which the said voltage supply means (B, V) include a voltage lifter circuit (V) including an electronic switch (Q1) intended to be controlled in an on/off manner in such a way that the voltage provided by the said voltage lifter circuit (V) depends on the average conduction time of the said electronic switch (Q1),
characterised in that it includes control means (CC) operable to apply to the electronic switch (Q1) of the voltage lifter circuit (V) a fixed frequency control signal of variable duty cycle such as to maintain the voltage delivered by the said voltage lifter circuit (V) substantially constant.

15. A circuit according to Claim 14, in which there are provided control means (CC) for controlling the power delivered to the lamp (L),
characterised in that the said control means include a control circuit (CC) operable to apply to the control inputs of the electronic switches (Q2, Q3, Q4, Q5) of the said inverter (INV) respective fixed frequency control signals having a duty cycle which is variable as a function of the power to be delivered to the lamp (L).

16. A circuit according to Claim 11, characterised in that the said voltage supply means (B) comprise a DC voltage source (B) and in that the said inverter comprises an H-bridge circuit (Figure 4) the input terminals of which are connected to the said voltage source (B) via an inductor (L1) and the central arm of which has a primary winding (W1) of a transformer (T) disposed therein, which transformer has two secondary half windings (W21, W22) having a central terminal connected to an input terminal (i2) of the output stage (HB) and end terminals connected to the said rectifier circuit (D2, D3), the output of which is in turn connected to the other input terminal (i1) of the output stage (HB); a capacitor (C11) being connected between the central terminal of the secondary half windings (W21, W22) of the transformer (T) and the output of the rectifier circuit (D2, D3).

17. A circuit according to Claim 13, in which the H-bridge circuit of the inverter (INV) includes first and second electronic switches (Q2, Q4) between the output of the voltage lifter circuit (V) and the terminals of the primary winding (W1) of the transformer (T), and the third and fourth electronic switches (Q3, Q5) between the terminals of the said primary winding (W1) and the ground conductor (GND); the first (second) and the fourth (third) electronic switch being diagonally opposite one another; and in which there are provided means for controlling the power delivered to the lamp (L);
characterised in that the said control means comprise a control circuit operable to apply to the control inputs of the said first (third) and second (fourth) switch of the bridge circuit of the inverter (INV) complimentary square wave control signals (V_{Q2}, V_{Q4}); the control signals applied to the first and third electronic switches being out of phase from one another by an amount variable as a function of the power to be delivered to the lamp (L).

18. A circuit according to any of Claims 1 to 3, characterised in that the inverter (INV) is of "forward" type and includes a transformer (T) with a primary winding (W1) connected in series with an electronic switch (Q2) between the output of the said voltage supply means (B,V) and the said ground conductor (GND), and with a secondary winding (W2) connected to a rectifier circuit (D2, D3) connected in turn to the output stage (HB), and a further winding (W3) connected in series with a diode (D4) between the output of the voltage lifter circuit (V) and the ground conductor (GND) to allow the flow of magnetisation current from the primary winding (W1) each time that the said electronic switch (Q2) is turned off.

19. A circuit according to Claim 18, in which the said voltage supply means (B, V) include a voltage lifter circuit (V) including an electronic switch (Q1) intended to be controlled in an on/off manner in such a way that the voltage provided at the output of the voltage lifter circuit (V) depends on the average conduction time of the said electronic switch (Q1), and in which there are provided control means (CC) for controlling the power delivered to the lamp (L);
characterised in that the said control means include a control circuit (CC) operable to apply to the control input of the said electronic switch (Q1) a fixed frequency control signal having a duty cycle variable as a function of the power delivered to the lamp (L).

20. A circuit according to Claim 19, characterised in that it includes control means (CC) operable to apply to the electronic switch (Q2) of the inverter (INV) a fixed frequency square wave control signal having a constant duty cycle.

21. A circuit according to Claim 18, in which there are provided means (CC) for controlling the power delivered to the lamp (L), characterised in that the said control means include a control circuit (CC) operable to apply to the input of the electronic switch (Q2) of the inverter (INV) a fixed frequency square wave control signal having a duty cycle variable as a function of the power to be delivered to the lamp (L).

22. A circuit according to Claim 21, in which the said voltage supply means (B, V) include a voltage lifter circuit (V) including an electronic switch (Q1) intended to be controlled in an on/off manner in such a way that the voltage provided by the said voltage lifter circuit (V) depends on the average conduction time of the said electronic switch (Q1),
characterised in that it includes control means (CC) operable to apply to the electronic switch (Q1) of the voltage lifter circuit (V) a fixed frequency control signal having a duty cycle variable in such a way as to maintain the voltage delivered from the said voltage lifter circuit (V) substantially constant.

23. A circuit according to any of Claims 1 to 3, characterised in that said voltage supply means (B) comprise a DC voltage source (B), and in that the said intermediate stage comprises a transformer (T) with a primary winding (W1) which has a first terminal connected via an inductor (L1) to the said source (B), and a second terminal connected to the ground conductor (GND) via the first electronic switch (Q2), and a secondary winding (W2) having a first terminal connected to an input terminal (i1) of the output stage (HB) via a first rectifier (D2) and the other terminal connected to the other input terminal (i2) of the output stage (HB); a further winding (W3) being disposed between the input terminals (i1, i2) of the output stage (HB) in series with which winding is connected a diode (D4); a second electronic switch (Q1) being disposed between the first terminal of the primary winding (W1) of the transformer (T) and the ground conductor (GND);
a control circuit (CC) being provided to deliver to the control inputs of the said first and second electronic switches (Q2, Q1) respectively, respective complimentary fixed frequency square wave signals with respective duty cycles variable as a function of the power to be delivered to the lamp (L).

24. A circuit according to any of Claims 1 to 3, characterised in that the said inverter (INV) is of "fly-back" type (Figures 7 and 8) and includes a transformer (T) having a primary winding (W1) with one terminal connected to the output of the said voltage supply means (B, V) and the other terminal connected to the ground conductor (GND) via an electronic switch (Q2), and a secondary winding (W2) having a terminal connected to one input terminal (i2) of the output stage (HB) and the other terminal connected to the other input terminal (i1) of the output stage (HB) via a rectifier (D2).

25. A circuit according to Claim 24, in which the said voltage supply means (B, V) include a voltage lifter circuit (V) including an electronic switch (Q1) intended to be controlled in an on/off manner in such a way that the voltage provided at the output of the said voltage lifter circuit (V) depends on the average conduction time of the said electronic switch (Q1), and in which there are provided control means (CC) for controlling the power delivered to the lamp (L);
characterised in that the said control means include a control circuit (CC) operable to apply to the control input of the said electronic switch (Q1) a fixed frequency control signal having a duty cycle variable as a function of the power to be delivered to the lamp (L).

26. A circuit according to Claim 24, characterised in that it includes control means (CC) operable to apply to the control input of the electronic switch (Q2) of the said inverter (INV) a fixed frequency control signal having a constant duty cycle.

27. A circuit according to Claim 24, in which the said voltage supply means (B,V) include a voltage lifter circuit (V) including an electronic switch (Q1) intended to be controlled in an on/off manner in such a way that the voltage provided by the said voltage lifter circuit (V) depends on the average conduction time of the said electronic switch (Q1),
characterised in that it includes control means (CC) operable to apply to the electronic switch (Q1) of the voltage lifter circuit (V) a fixed frequency control signal having a duty cycle variable in such a way as to maintain the voltage delivered by the said voltage lifter circuit (V) substantially constant.

28. A circuit according to Claim 27, in which there are provided control means (CC) for controlling the power delivered to the lamp (L) characterised in that the said control means include a control circuit (CC) operable to apply to the control inputs of the electronic switch (Q2) of the said inverter (INV) a fixed frequency control signal having a duty cycle variable as a function of the power to be delivered to the lamp (L).

29. A circuit according to any of Claims 1 to 3, characterised in that the said inverter (INV) is of "forward" type (Figure 8) and comprises
- a transformer (T) with a primary winding (W1) disposed between two electronic switches (Q2, Q3) in a circuit branch connected between the output of the said voltage supply means (B,V) and the ground conductor (GND), and having a secondary winding (W2) connected to the input terminals (i1, i2) of the output stage (HB) via a rectifier circuit (D2, D3);
- first and second rectifiers (D5, D6) respectively connected between one terminal of the primary winding (W1) and the output of the voltage supply means (V), and between the other terminal of the primary winding (W1) and the ground conductor (GND), to allow the reverse flow of magnetisation current of this primary winding (W1) when the said electronic switches (Q2, Q3) are turned off.

30. A circuit according to Claim 29, in which the said voltage supply means (B, V) include a voltage lifter circuit (V) including an electronic switch (Q1) intended to be controlled in an on/off manner so that the voltage provided at the output of the said voltage lifter circuit (V) depends on the average conduction time of the said electronic switch (Q1), and in which there are provided control means (CC) for controlling the power delivered to the lamp (L);
characterised in that the said control means comprise a control circuit (CC) operable to apply to the control input of the said electronic switch (Q1) a fixed frequency control signal having a duty cycle variable as a function of the power to be delivered to the lamp (L).

31. A circuit according to Claim 30, characterised in that it includes control means (CC) operable to apply to the control inputs of the electronic switches (Q2, Q3) of the said inverter (INV) respective fixed frequency constant duty cycle control signals.

32. A circuit according to Claim 29, in which the said voltage supply means (B, V) include a voltage lifter circuit (V) including an electronic switch (Q1) intended to be controlled in an on/off manner in such a way that the voltage provided by the said voltage lifter circuit (V) depends on the average conduction time of the said electronic switch (Q1),
characterised in that it includes control means (CC) operable to apply to the electronic switch (Q1) of the voltage lifter circuit (V) a fixed frequency control signal having a duty cycle variable in such a way as to maintain the voltage delivered by the said voltage lifter circuit (V) substantially constant.

33. A circuit according to Claim 32, in which there are provided control means (CC) for controlling the power delivered to the lamp (L),
characterised in that the said control means include a control circuit (CC) operable to apply to the control inputs of the electronic switches (Q2, Q3) of the said inverter (INV) respective fixed frequency control signals having a duty cycle variable as a function of the power to be delivered to the lamp (L).

34. A circuit according to any of Claims 1 to 3, characterised in that the said inverter (INV) is of half-bridge type (Figure 9) and includes a transformer (T) having a primary winding (W1) with one terminal connected to a capacitive voltage divider (C4, C5) interposed between the output of the said voltage supply means (B, V) and the ground conductor (GND), and the other terminal connected to the junction between two electronic switches (Q2, Q3) disposed in a circuit branch in parallel with the said capacitive voltage divider (C4, C5); and two secondary half windings (W21, W22) connected to the input terminals (i1, i2) of the output stage (HB) via a rectifier circuit (D2, D3).

35. A circuit according to Claim 34, in which the said voltage supply means (B, V) include a voltage lifter circuit (V) having an electronic switch (Q1) intended to be controlled in an on/off manner in such a way that the voltage supplied at the output from the said voltage lifter circuit (V) depends on the average conduction time of the said electronic switch (Q1), and which there are provided means (CC) for controlling the power delivered to the lamp (L);
characterised in that the said control means include a control circuit (CC) adapted to apply to the control input of the said electronic switch (Q1) a fixed frequency control signal having a duty cycle variable as a function of the power to be delivered to the lamp (L).

36. A circuit according to Claim 34, characterised in that it includes control means (CC) operable to apply to the control inputs of the electronic switches (Q2, Q3) of the said inverter (INV) respective fixed frequency control signals having a constant duty cycle.

37. A circuit according to Claim 34, in which the said voltage supply means (B, V) include a voltage lifter circuit (V) including an electronic switch (Q1) indented to be controlled in an on/off manner in such a way that the voltage provided by the said voltage lifter circuit (V) depends on the average conduction time of the said electronic switch (Q1),
characterised in that it includes control means (CC) operable to apply to the electronic switch (Q1) of the voltage lifter circuit (V) a fixed frequency control signal having a duty cycle variable in such a way as to maintain the voltage delivered by the said voltage lifter circuit (V) substantially constant.

38. A circuit according to Claim 37, in which there are provided control means (CC) for controlling the power delivered to the lamp (L),
characterised in that the said control means include a control circuit (CC) operable to apply to the control inputs of the electronic switches (Q2, Q3) of the said inverter (INV) respective fixed frequency control signals having a duty cycle variable as a function of the power to be delivered to the lamp (L).

39. A circuit according to any preceding Claim, characterised in that the said starter means include a high frequency LC resonant circuit (LX; C10) including a capacitor (C10) in parallel with the lamp (L) and an inductor (LX) of air type connected in series with the lamp (L).

## Patentansprüche

1. Ansteuerstufe für eine Gasentladungslampe (L), die besonders in Kraftfahrzeugen Verwendung findet, wobei die Ansteuerstufe enthält:
eine Versorgungseinrichtung (B, V), die in Betrieb steht, um zwischen einem Ausgang und Masse (GND) eine Gleichspannung zu liefern; sowie
eine Ausgangsstufe (HB), die mit dem Gleichspannungsgenerator verbunden ist, und in der die Lampe (L) sowie eine zugeordnete reaktive Startereinrichtung (L, C10) angeordnet sind; wobei die Ausgangsstufe (HB) mit Masse (GND) verbunden ist,
wobei zwischen der Gleichspannungs-Versorgungseinrichtung (B, V) und der Ausgangsstufe (HB) eine Zwischenstufe liegt, die einen Inverter (INV) aufweist, der einen Transformator (T) mit einer Primärwicklung und einer Sekundärwicklung (W11, W12, W1; W21, W22, W2) enthält;
dadurch gekennzeichnet, daß
die Sekundärwicklung (W21, W22, W2) des Transformators (T) von Masse (GND) getrennt und mit einer Gleichrichterstufe (D2, D3) verbunden ist, die gleichfalls von Masse (GND) getrennt ist;
wobei die Ausgangsstufe (HB) als H-Brückenschaltung aufgebaut ist, wobei die Eingänge (il, i2) mit dem Ausgang der Gleichrichterstufe (D2, D3) verbunden sind; wobei die Lampe (L) und die zugeordnete Startereinrichtung (L, C10) im Mittelarm der Ausgangsstufe (HB) angeordnet sind;
wobei die Ausgangsstufe (HB) mit Masse (GND) so verbunden ist, daß im Betrieb die Spannung an der Lampe (L) bezogen auf Masse (GND) einen nichtpositiven Mittelwert besitzt.

2. Stufe gemäß Anspruch 1, dadurch gekennzeichnet, daß die Lampe (L) einen Anschluß besitzt, der mit Masse (GND) verbunden ist.

3. Stufe gemäß Anspruch 1, dadurch gekennzeichnet, daß jener Ausgang der Ausgangsstufe (HB), der im Betrieb das höchste Potential erreicht, mit Masse (GND) verbunden ist.

4. Stufe gemäß irgendeinem der Ansprüche 1 bis 3, dadurch gekennzeichnet, daß die Zwischenstufe einen Inverter (INV; Fig.1, Fig. 2) aufweist, der im Gegentaktbetrieb arbeitet und einen Transformator (T) mit zwei primärseitigen Halbwicklungen (W11, W12) aufweist, die einen Mittelanschluß, der mit dem Ausgang der Spannungsversorgungseinrichtung (B, V) verbunden ist, sowie Enden besitzen, die über einen ersten bzw. zweiten Elektronikschalter (Q2, Q3) mit Masse (GND) verbunden sind, sowie mit zwei sekundärseitigen Halbwicklungen (W21, W22) aufweist, die einen Mittelanschluß, der mit einem Eingang (i2) der Ausgangsstufe (HB) verbunden ist, sowie Enden besitzen, die über die Gleichrichterstufe (D2, D3) mit dem anderen Eingang (i1) der Ausgangsstufe (HB) verbunden sind.

5. Stufe gemäß Anspruch 4, wobei die Spannungsversorgungseinrichtung (B, V) eine Spannungshebestufe (V) enthält, die einen Elektronikschalter (Q1) aufweist, der dazu dient, um im EIN/AUS-Betrieb so gesteuert zu werden, daß die am Ausgang der Spannungshebestufe (V) bereitgestellte Spannung von der mittleren Einschaltzeit des Elektronikschalters (Q1) abhängt, und wobei eine Einrichtung (CC) vorgesehen ist, um die der Lampe (L) zugeführte Leistung zu steuern;
dadurch gekennzeichnet, daß die Steuereinrichtung eine Steuerstufe (CC) enthält, die in Betrieb steht, um an den Steuereingang des Elektronikschalters (Q1) ein Steuersignal mit fester Frequenz und veränderbarem Tastverhältnis in Abhängigkeit von jener Leistung anzulegen, die der Lampe (L) zugeführt werden soll.

6. Stufe gemäß Anspruch 5, dadurch gekennzeichnet, daß die Stufe eine Steuereinrichtung (CC) aufweist, die in Betrieb steht, um an die Steuereingänge der Elektronikschalter (Q2, Q3) des Inverters (INV) entsprechende Steuersignale mit fester Frequenz und konstantem Tastverhältnis anzulegen.

7. Stufe gemäß Anspruch 4, wobei die Spannungsversorgungseinrichtung (B, V) eine Spannungshebestufe (V) aufweist, die einen Elektronikschalter (Q1) besitzt, der dazu dient, um im EIN/AUS-Betrieb so gesteuert zu werden, daß die von der Spannungshebestufe (V) gelieferte Spannung von der mittleren Einschaltzeit des Elektronikschalters (Q1) abhängt,
dadurch gekennzeichnet, daß die Stufe eine Steuereinrichtung (CC) aufweist, die in Betrieb steht, um an den Elektronikschalter (Q1) der Spannungshebestufe (V) ein Steuersignal, das eine feste Frequenz und ein veränderbares Tastverhältnis besitzt, so anzulegen, um die von der Spannungshebestufe (V) gelieferte Spannung im wesentlichen konstant zu halten.

8. Stufe gemäß Anspruch 7, wobei eine Einrichtung (CC) vorgesehen ist, um die der Lampe (L) zugeführte Leistung zu steuern,
dadurch gekennzeichnet, daß die Steuereinrichtung eine Steuerstufe (CC) aufweist, die in Betrieb steht, um an die Steuereingänge der Elektronikschalter (Q2, Q3) des Inverters (INV) entsprechende Steuersignale mit fester Frequenz anzulegen, die ein Tastverhältnis besitzen, das als Funktion jener Leistung veränderbar ist, die der Lampe (L) zugeführt werden soll.

9. Stufe gemäß Anspruch 4, dadurch gekennzeichnet, daß die Spannungsversorgungseinrichtung (B) eine Gleichspannungsquelle (B) enthält, und daß die Zwischenstufe einen Inverter (INV, Fig.2) aufweist, der im Gegentaktbetrieb arbeitet und einen Transformator (T) mit zwei primärseitigen Halbwicklungen (W11, W12) aufweist, die einen Mittelanschluß, der über eine Induktivität (L1) mit dem Ausgang der Spannungsquelle (B) verbunden ist, sowie zwei Enden besitzen, die über einen ersten bzw. zweiten Elektronikschalter (Q2, Q3) mit Masse (GND) verbunden sind, sowie mit zwei sekundärseitigen Halbwicklungen (W21, W22) aufweist, die einen Mittelanschluß, der mit einem Eingang (i2) der Ausgangsstufe (HB) verbunden ist, sowie zwei Enden besitzen, die mit der Gleichrichterstufe (D2, D3) verbunden sind; wobei zwischen den Eingängen (i1, i2) der Ausgangsstufe (HB) ein Kondensator (C11) liegt.

10. Stufe gemäß Anspruch 9, dadurch gekennzeichnet, daß die Stufe eine Steuerstufe (CC) aufweist, die in Betrieb steht, um an die Steuereingänge der Elektronikschalter (Q2, Q3) des Inverters (INV) entsprechende Rechteckschwingungs-Steuersignale mit fester Frequenz und veränderbarem Tastverhältnis anzulegen, so daß die Elektronikschalter (Q2, Q3) niemals gleichzeitig gesperrt werden; wobei das Tastverhältnis der Signale (V_{Q2}, V_{Q3}) als Funktion jener Leistung veränderbar ist, die der Lampe (L) zugeführt werden soll.

11. Stufe gemäß irgendeinem der Ansprüche 1 bis 3, dadurch gekennzeichnet, daß der Inverter (INV) eine H-Brückenschaltung (Fig.3, 4) aufweist, deren Eingänge mit dem Ausgang der Spannungsversorgung (B, V) verbunden sind, wobei der Mittelarm eine Primärwicklung (W1) eines Transformators (T) besitzt, der zwei sekundärseitige Halbwicklungen (W21, W22) besitzt, die einen Mittelanschluß, der mit einem Eingang (i2) der Ausgangsstufe (HB) verbunden ist, sowie Enden besitzen, die mit der Gleichrichterstufe (D2, D3) verbunden sind, deren Ausgang am anderen Eingang (i1) der Ausgangsstufe (HB) liegt.

12. Stufe gemäß Anspruch 11, wobei die Spannungsversorgungseinrichtung (B, V) eine Spannungshebestufe (V) aufweist, die einen Elektronikschalter (Q1) aufweist, der dazu dient, um im EIN/AUS-Betrieb so gesteuert zu werden, daß die am Ausgang der Spannungshebestufe (V) bereitgestellte Spannung von der mittleren Einschaltzeit des Elektronikschalters (Q1) abhängt, und wobei eine Steuereinrichtung (CC) vorgesehen ist, um die der Lampe (L) zugeführte Leistung zu steuern;
dadurch gekennzeichnet, daß die Steuereinrichtung eine Steuerstufe (CC) enthält, die in Betrieb steht, um an den Steuereingang des Elektronikschalters (Q1) ein Steuersignal mit fester Frequenz zu legen, das ein Tastverhältnis besitzt, das als Funktion jener Leistung veränderbar ist, die der Lampe (L) zugeführt werden soll.

13. Stufe gemäß Anspruch 12, dadurch gekennzeichnet, daß die Stufe eine Steuereinrichtung (CC) aufweist, die in Betrieb steht, um an die Steuereingänge der Elektronikschalter (Q2, Q3, Q4, Q5) des Inverters (INV) entsprechende Steuersignale mit fester Frequenz und konstantem Tastverhältnis anzulegen.

14. Stufe gemäß Anspruch 11, wobei die Spannungsversorgungseinrichtung (B, V) eine Spannungshebestufe (V) aufweist, die einen Elektronikschalter (Q1) aufweist, der dazu dient, um im EIN/AUS-Betrieb so gesteuert zu werden, daß die von der Spannungshebestufe (V) gelieferte Spannung von der mittleren Einschaltzeit des Elektronikschalters (Q1) abhängt,
dadurch gekennzeichnet, daß die Stufe eine Steuereinrichtung (CC) aufweist, die in Betrieb steht, um an den Elektronikschalter (Q1) der Spannungshebestufe (V) ein Steuersignal anzulegen, das eine feste Frequenz und ein veränderbares Tastverhältnis besitzt, um die von der Spannungshebestufe (V) gelieferte Spannung im wesentlichen konstant zu halten.

15. Stufe gemäß Anspruch 14, wobei eine Steuereinrichtung (CC) vorgesehen ist, um die der Lampe (L) zugeführte Leistung zu steuern, dadurch gekennzeichnet, daß die Steuereinrichtung eine Steuerstufe (CC) aufweist, die in Betrieb steht, um an die Steuereingänge der Elektronikschalter (Q2, Q3, Q4, Q5) des Inverters (INV) entsprechende Steuersignale mit fester Frequenz anzulegen, die ein Tastverhältnis besitzen, das als Funktion jener Leistung veränderbar ist, die der Lampe (L) zugeführt werden soll.

16. Stufe gemäß Anspruch 11, dadurch gekennzeichnet, daß die Spannungsversorgungseinrichtung (B) eine Gleichspannungsquelle (B) enthält, und daß der Inverter (INV) eine H-Brückenschaltung (Fig.4) enthält, deren Eingänge über eine Induktivität (L1) mit der Spannungsquelle (B) verbunden sind, und deren Mittelarm eine Primärwicklung (W1) eines Transformators (T) besitzt, die darin angeordnet ist, wobei der Transformator (T) zwei sekundärseitige Halbwicklungen (W21, W22) besitzt, die einen Mittelanschluß, der mit einem Eingang (i2) der Ausgangsstufe (HB) verbunden ist, sowie Enden besitzen, die mit der Gleichrichterstufe (D2, D3) verbunden sind, deren Ausgang seinerseits mit dem anderen Eingang (i1) der Ausgangsstufe (HB) verbunden ist; wobei zwischen dem Mittelanschluß der sekundärseitigen Halbwicklungen (W21, W22) des Transformators (T) und dem Ausgang der Gleichrichterstufe (D2, D3) ein Kondensator (C11) liegt.

17. Stufe gemäß Anspruch 13, wobei die H-Brückenschaltung des Inverters (INV) einen ersten und zweiten Elektronikschalter (Q2, Q4) zwischen dem Ausgang der Spannungshebestufe (V) und den Anschlüssen der Primärwicklung (W1) des Transformators (T) sowie dritte und vierte Elektronikschalter (Q3, Q5) zwischen den Anschlüssen der Primärwicklung (W1) und Masse (GND) aufweist; wobei der erste (zweite) und der vierte (dritte) Elektronikschalter diagonal entgegengesetzt zueinander liegen; und wobei eine Einrichtung vorgesehen ist, um jene Leistung zu steuern, die der Lampe (L) zugeführt wird;
dadurch gekennzeichnet, daß die Steuereinrichtung eine Steuerstufe enthält, die in Betrieb steht, um an die Steuereingänge des ersten (dritten) und zweiten (vierten) Schalters der Brükkenschaltung des Inverters (INV) komplementäre Rechteckschwingungs-Steuersignale (V_{Q2}, V_{Q4}) anzulegen; wobei die an den ersten und dritten Elektronikschalter angelegten Steuersignale zueinander um einen Betrag außerphasig sind, der als Funktion jener Leistung veränderbar ist, die der Lampe (L) zugeführt werden soll.

18. Stufe gemäß irgendeinem der Ansprüche 1 bis 3, dadurch gekennzeichnet, daß der Inverter (INV) im "Vorwärts"-Betrieb arbeitet und einen Transformator (T) mit einer Primärwicklung (W1), die in Serie mit einem Elektronikschalter (Q2) zwischen dem Ausgang der Spannungsversorgungseinrichtung (B, V) und Masse (GND) liegt, mit einer Sekundärwicklung (W2), die mit einer Gleichrichterstufe (D2, D3) verbunden ist, die ihrerseits an der Ausgangsstufe (HB) liegt, sowie mit einer weiteren Wicklung (W3) aufweist, die zwischen dem Ausgang der Spannungshebestufe (V) und Masse (GND) mit einer Diode (D4) in Serie liegt, damit der Magnetisierungsstrom von der Primärwicklung (W1) immer dann fließen kann, wenn der Elektronikschalter (Q2) gesperrt ist.

19. Stufe gemäß Anspruch 18, wobei die Spannungsversorgungseinrichtung (B, V) eine Spannungshebestufe (V) aufweist, die einen Elektronikschalter (Q1) aufweist, der dazu dient, um im EIN/AUS-Betrieb so gesteuert zu werden, daß die am Ausgang der Spannungshebestufe (V) bereitgestellte Spannung von der mittleren Einschaltzeit des Elektronikschalters (Q1) abhängt, und wobei eine Steuereinrichtung (CC) vorgesehen ist, um die der Lampe (L) zugeführte Leistung zu steuern;
dadurch gekennzeichnet, daß die Steuereinrichtung eine Steuerstufe (CC) aufweist, die in Betrieb steht, um an den Steuereingang des Elektronikschalters (Q1) ein Steuersignal mit fester Frequenz und einem Tastverhältnis anzulegen, das als Funktion jener Leistung veränderbar ist, die der Lampe (L) zugeführt werden soll.

20. Stufe gemäß Anspruch 19, dadurch gekennzeichnet, daß die Stufe eine Steuereinrichtung (CC) aufweist, die in Betrieb steht, um an den Elektronikschalter (Q2) des Inverters (INV) ein Rechteckschwingungs-Steuersignal mit fester Frequenz anzulegen, das ein konstantes Tastverhältnis besitzt.

21. Stufe gemäß Anspruch 18, wobei eine Einrichtung (CC) vorgesehen ist, um die der Lampe (L) zugeführte Leistung zu steuern, dadurch gekennzeichnet, daß die Steuereinrichtung eine Steuerstufe (CC) aufweist, die in Betrieb steht, um an den Eingang des Elektronikschalters (Q2) des Inverters (INV) ein Rechteckschwingungs-Steuersignal mit fester Frequenz anzulegen, das ein Tastverhältnis besitzt, das als Funktion jener Leistung veränderbar ist, die der Lampe (L) zugeführt werden soll.

22. Stufe gemäß Anspruch 21, wobei die Spannungsversorgungseinrichtung (B, V) eine Spannungshebestufe (V) aufweist, die einen Elektronikschalter (Q1) aufweist, der dazu dient, um im EIN/AUS-Betrieb so gesteuert zu werden, daß die von der Spannungshebestufe (V) gelieferte Spannung von der mittleren Einschaltzeit des Elektronikschalters (Q1) abhängt,
dadurch gekennzeichnet, daß die Stufe eine Steuereinrichtung (CC) aufweist, die in Betrieb steht, um an den Elektronikschalter (Q1) der Spannungshebestufe (V) ein Steuersignal mit fester Frequenz anzulegen, das ein Tastverhältnis besitzt, das so veränderbar ist, daß die von der Spannungshebestufe (V) gelieferte Spannung im wesentlichen konstant gehalten wird.

23. Stufe gemäß irgendeinem der Ansprüche 1 bis 3, dadurch gekennzeichnet, daß die Spannungsversorgungseinrichtung (B) eine Gleichspannungsquelle (B) enthält, und daß die Zwischenstufe einen Transformator (T) mit einer Primärwicklung (W1), die einen ersten Anschluß besitzt, der über eine Induktivität (L1) mit der Quelle (B) verbunden ist, und einen zweiten Anschluß besitzt, der über den ersten Elektronikschalter (Q2) an Masse (GND) liegt, sowie mit einer Sekundärwicklung (W2) enthält, die einen ersten Anschluß besitzt, der über einen ersten Gleichrichter (D2) mit einem Eingang (il) der Ausgangsstufe (HB) verbunden ist, wobei der andere Anschluß mit dem anderen Eingang (i2) der Ausgangsstufe (HB) verbunden ist; wobei eine weitere Wicklung (W3) zwischen den Eingängen (il, i2) der Ausgangsstufe (HB) liegt, wobei eine Diode (D4) in Serie mit dieser Wicklung geschaltet ist; wobei ein zweiter Elektronikschalter (Q1) zwischen dem ersten Anschluß der Primärwicklung (W1) des Transformators (T) und Masse (GND) liegt;
wobei eine Steuerstufe (CC) vorgesehen ist, um an die Steuereingänge des ersten bzw. zweiten Elektronikschalters (Q2, Q1) entsprechende komplementäre Rechteckschwingungssignale mit fester Frequenz anzulegen, deren Tastverhältnis als Funktion jener Leistung veränderbar ist, die der Lampe (L) zugeführt werden soll.

24. Stufe gemäß irgendeinem der Ansprüche 1 bis 3, dadurch gekennzeichnet, daß der Inverter (INV) im "Rücklauf"-Betrieb (Fig.7 und 8) arbeitet und einen Transformator (T) aufweist, der eine Primärwicklung (W1), von der ein Anschluß mit dem Ausgang der Spannungsversorgungseinrichtung (B, V) und deren anderer Anschluß über einen Elektronikschalter (Q2) mit Masse (GND) verbunden ist, sowie eine Sekundärwicklung (W2) besitzt, die einen Anschluß besitzt, der mit einem Eingang (i2) der Ausgangsstufe (HB) verbunden ist, wobei der andere Anschluß über einen Gleichrichter (D2) am anderen Eingang (i1) der Ausgangsstufe (HB) liegt.

25. Stufe gemäß Anspruch 24, wobei die Spannungsversorgungseinrichtung (B, V) eine Spannungshebestufe (V) aufweist, die einen Elektronikschalter (Q1) aufweist, der dazu dient, um im EIN/AUS-Betrieb so gesteuert zu werden, daß die am Ausgang der Spannungshebestufe (V) bereitgestellte Spannung von der mittleren Einschaltzeit des Elektronikschalters (Q1) abhängt, und wobei eine Steuereinrichtung (CC) vorgesehen ist, um die der Lampe (L) zugeführte Leistung zu steuern;
dadurch gekennzeichnet, daß die Steuereinrichtung eine Steuerstufe (CC) aufweist, die in Betrieb steht, um an den Steuereingang des Elektronikschalters (Q1) ein Steuersignal mit fester Frequenz anzulegen, das ein Tastverhältnis besitzt, das als Funktion jener Leistung veränderbar ist, die der Lampe (L) zugeführt werden soll.

26. Stufe gemäß Anspruch 24, dadurch gekennzeichnet, daß die Stufe eine Steuereinrichtung (CC) aufweist, die in Betrieb steht, um an den Steuereingang des Elektronikschalters (Q2) des Inverters (INV) ein Steuersignal mit fester Frequenz anzulegen, das ein konstantes Tastverhältnis besitzt.

27. Stufe gemäß Anspruch 24, wobei die Spannungsversorgungseinrichtung (B, V) eine Spannungshebestufe (V) aufweist, die einen Elektronikschalter (Q1) aufweist, der dazu dient, um im EIN/AUS-Betrieb so gesteuert zu werden, daß die von der Spannungshebestufe (V) gelieferte Spannung von der mittleren Einschaltzeit des Elektronikschalters (Q1) abhängt,
dadurch gekennzeichnet, daß die Stufe eine Steuereinrichtung (CC) aufweist, die in Betrieb steht, um an den Elektronikschalter (Q1) der Spannungshebestufe (V) ein Steuersignal mit fester Frequenz anzulegen, das ein Tastverhältnis besitzt, das so veränderbar ist, daß die von der Spannungshebestufe (V) gelieferte Spannung im wesentlichen konstant gehalten wird.

28. Stufe gemäß Anspruch 27, wobei eine Steuereinrichtung (CC) vorgesehen ist, um die der Lampe (L) zugeführte Leistung zu steuern, dadurch gekennzeichnet, daß die Steuereinrichtung eine Steuerstufe (CC) aufweist, die in Betrieb steht, um an die Steuereingänge des Elektronikschalters (Q2) des Inverters (INV) ein Steuersignal mit fester Frequenz anzulegen, das ein Tastverhältnis besitzt, das als Funktion jener Leistung veränderbar ist, die der Lampe (L) zugeführt werden soll.

29. Stufe gemäß irgendeinem der Ansprüche 1 bis 3, dadurch gekennzeichnet, daß der Inverter (INV) im "Vorwärts"-Betrieb (Fig.8) arbeitet, wobei er enthält:
- einen Transformator (T) mit einer Primärwicklung (W1), die zwischen zwei Elektronikschaltern (Q2, Q3) in einem Schaltkreiszweig liegt, der zwischen dem Ausgang der Spannungsversorgungseinrichtung (B, V) und Masse (GND) liegt, sowie mit einer Sekundärwicklung (W2), die über eine Gleichrichterstufe (D2, D3) mit den Eingängen (i1, i2) der Ausgangsstufe (HB) verbunden ist;
- einen ersten und zweiten Gleichrichter (D5, D6), die jeweils zwischen einem Anschluß der Primärwicklung (W1) und dem Ausgang der Spannungsversorgungseinrichtung (V) sowie zwischen dem anderen Anschluß der Primärwicklung (W1) und Masse (GND) liegen, um den Magnetisierungsstrom dieser Primärwicklung (W1) zurückfließen zu lassen, wenn die Elektronikschalter (Q2, Q3) gesperrt sind.

30. Stufe gemäß Anspruch 29, wobei die Spannungsversorgungseinrichtung (B, V) eine Spannungshebestufe (V) aufweist, die einen Elektronikschalter (Q1) aufweist, der dazu dient, um im EIN/AUS-Betrieb so gesteuert zu werden, daß die am Ausgang der Spannungshebestufe (V) bereitgestellte Spannung von der mittleren Einschaltzeit des Elektronikschalters (Q1) abhängt, und wobei eine Steuereinrichtung (CC) vorgesehen ist, um die der Lampe (L) zugeführte Leistung zu steuern;
dadurch gekennzeichnet, daß die Steuereinrichtung eine Steuerstufe (CC) enthält, die in Betrieb steht, um an den Steuereingang des Elektronikschalters (Q1) ein Steuersignal mit fester Frequenz anzulegen, das ein Tastverhältnis besitzt, das als Funktion jener Leistung veränderbar ist, die der Lampe (L) zugeführt werden soll.

31. Stufe gemäß Anspruch 30, dadurch gekennzeichnet, daß die Stufe eine Steuereinrichtung (CC) aufweist, die in Betrieb steht, um an die Steuereingänge der Elektronikschalter (Q2, Q3) des Inverters (INV) entsprechende Steuersignale mit fester Frequenz und konstantem Tastverhältnis anzulegen.

32. Stufe gemäß Anspruch 29, wobei die Spannungsversorgungseinrichtung (B, V) eine Spannungshebestufe (V) aufweist, die einen Elektronikschalter (Q1) aufweist, der dazu dient, um im EIN/AUS-Betrieb so gesteuert zu werden, daß die von der Spannungshebestufe (V) gelieferte Spannung von der mittleren Einschaltzeit des Elektronikschalters (Q1) abhängt,
dadurch gekennzeichnet, daß die Stufe eine Steuereinrichtung (CC) aufweist, die in Betrieb steht, um an den Elektronikschalter (Q1) der Spannungshebestufe (V) ein Steuersignal mit fester Frequenz anzulegen, das ein Tastverhältnis besitzt, das so veränderbar ist, um die von der Spannungshebestufe (V) gelieferte Spannung im wesentlichen konstant zu halten.

33. Stufe gemäß Anspruch 32, wobei eine Steuereinrichtung (CC) vorgesehen ist, um die der Lampe (L) zugeführte Leistung zu steuern, dadurch gekennzeichnet, daß die Steuereinrichtung eine Steuerstufe (CC) aufweist, die in Betrieb steht, um an die Steuereingänge der Elektronikschalter (Q2, Q3) des Inverters (INV) entsprechende Steuersignale mit fester Frequenz anzulegen, die ein Tastverhältnis besitzen, das als Funktion jener Leistung veränderbar ist, die der Lampe (L) zugeführt werden soll.

34. Stufe gemäß irgendeinem der Ansprüche 1 bis 3, dadurch gekennzeichnet, daß der Inverter (INV) im Halbbrücken -Betrieb (Fig.9) arbeitet und einen Transformator (T) mit einer Primärwicklung (W1), von der ein Anschluß mit einem kapazitiven Spannungsteiler (C4, C5) verbunden ist, der zwischen dem Ausgang der Spannungsversorgungseinrichtung (B, V) und Masse (GND) liegt, wobei der andere Anschluß mit dem Verbindungspunkt zwischen den beiden Elektronikschaltern (Q2, Q3) verbunden ist, die in einem Schaltkreiszweig angeordnet sind, der parallel zum kapazitiven Spannungsteiler (C4, C5) liegt; sowie mit zwei sekundärseitigen Halbwicklungen (W21, W22) besitzt, die über eine Gleichrichterstufe (D2, D3) mit den Eingängen (i1, i2) der Ausgangsstufe (HB) verbunden sind.

35. Stufe gemäß Anspruch 34, wobei die Spannungsversorgungseinrichtung (B, V) eine Spannungshebestufe (V) aufweist, die einen Elektronikschalter (Q1) besitzt, der dazu dient, um im EIN/AUS-Betrieb so gesteuert zu werden, daß die am Ausgang der Spannungshebestufe (V) bereitgestellte Spannung von der mittleren Einschaltzeit des Elektronikschalters (Q1) abhängt, und wobei eine Einrichtung (CC) vorgesehen ist, um die der Lampe (L) zugeführte Leistung zu steuern;
dadurch gekennzeichnet, daß die Steuereinrichtung eine Steuerstufe (CC) aufweist, die so aufgebaut ist, um an den Steuereingang des Elektronikschalters (Q1) ein Steuersignal mit fester Frequenz zu legen, das ein Tastverhältnis besitzt, das als Funktion jener Leistung veränderbar ist, die der Lampe (L) zugeführt werden soll.

36. Stufe gemäß Anspruch 34, dadurch gekennzeichnet, daß die Stufe eine Steuereinrichtung (CC) aufweist, die in Betrieb steht, um an die Steuereingänge der Elektronikschalter (Q2, Q3) des Inverters (INV) entsprechende Steuersignale mit fester Frequenz anzulegen, die ein konstantes Tastverhältnis besitzen.

37. Stufe gemäß Anspruch 34, wobei die Spannungsversorgungseinrichtung (B, V) eine Spannungshebestufe (V) aufweist, die einen Elektronikschalter (Q1) aufweist, der dazu dient, um im EIN/AUS-Betrieb so gesteuert zu werden, daß die von der Spannungshebestufe (V) gelieferte Spannung von der mittleren Einschaltzeit des Elektronikschalters (Q1) abhängt,
dadurch gekennzeichnet, daß die Stufe eine Steuereinrichtung (CC) aufweist, die in Betrieb steht, um an den Elektronikschalter (Q1) der Spannungshebestufe (V) ein Steuersignal mit fester Frequenz anzulegen, das ein Tastverhältnis besitzt, das so veränderbar ist, um die von der Spannungshebestufe (V) gelieferte Spannung im wesentlichen konstant zu halten.

38. Stufe gemäß Anspruch 37, wobei eine Steuereinrichtung (CC) vorgesehen ist, um die der Lampe (L) zugeführte Leistung zu steuern, dadurch gekennzeichnet, daß die Steuereinrichtung eine Steuerstufe (CC) aufweist, die in Betrieb steht, um an die Steuereingänge der Elektronikschalter (Q2, Q3) des Inverters (INV) entsprechende Steuersignale mit fester Frequenz anzulegen, die ein Tastverhältnis besitzen, das als Funktion jener Leistung veränderbar ist, die der Lampe (L) zugeführt werden soll.

39. Stufe gemäß irgendeinem der bisherigen Ansprüche, dadurch gekennzeichnet, daß die Startereinrichtung einen hochfrequenten LC-Resonanzkreis (LX; C10) aufweist, der einen Kondensator (C10) parallel zur Lampe (L) sowie eine Induktivität (LX) aufweist, bei der es sich um eine Induktivität ohne Eisenkern handelt, die mit der Lampe (L) in Serie liegt.

## Revendications

1. Circuit de commande pour une lampe à décharge (L) à utiliser en particulier dans des véhicules automobiles, comprenant
des moyens d'alimentation (B, V) pouvant fonctionner pour fournir une tension continue entre une borne de sortie et un fil de terre (GND) ; et
un étage de sortie (HB) connecté aux moyens de générateur de tension continue, et dans lequel la lampe (L) et des moyens de démarreur réactif associés (L, C10) sont disposés ; ledit étage de sortie (HB) étant connecté audit fil de terre (GND),
un étage intermédiaire, qui comprend un inverseur (INV) comprenant un transformateur (T) avec un enroulement primaire et un enroulement secondaire (W11, W12, W1 ; W21, W22, W2), étant intercalé entre lesdits moyens d'alimentation en tension continue (B, V) et ledit étage de sortie (HB) ;
caractérisé en ce que
l'enroulement secondaire (W21, W22, W2) dudit transformateur (T) est découplé dudit fil de terre (GND) et est connecté à un circuit redresseur (D2, D3) également découplé du fil de terre (GND) ;
ledit étage de sortie (HB) ayant une configuration en pont en H, les bornes d'entrée (i1, i2) étant connectées à la sortie dudit circuit redresseur (D2, D3) ; la lampe (L) et les moyens de démarreur associés (L, C10) étant disposés dans le bras central dudit étage de sortie (HB) ;
ledit étage de sortie (HB) étant connecté au fil de terre (GND) de telle manière que, en fonctionnement, la tension dans la lampe (L) a, par rapport audit fil de terre (GND), une valeur moyenne non positive.

2. Circuit selon la revendication 1, caractérisé en ce que la lampe (L) a une borne connectée au fil de terre (GND).

3. Circuit selon la revendication 1, caractérisé en ce que la borne de l'étage de sortie (HB) qui, en fonctionnement, atteint le potentiel le plus élevé, est connectée audit fil de terre (GND).

4. Circuit selon l'une quelconque des revendications 1 à 3, caractérisé en ce que ledit étage intermédiaire comprend un inverseur (INV ; figure 1, figure 2) de type push-pull comprenant un transformateur (T) avec deux demi-enroulements primaires (W11, W12) ayant une borne centrale connectée à la sortie desdits moyens d'alimentation en tension (B, V) et des bornes d'extrémité connectées audit fil de terre (GND) par l'intermédiaire de premier et deuxième commutateurs électroniques (Q2, Q3), respectivement, et avec deux demi-emroulements secondaires (W21, W22) ayant une borne centrale connectée à une borne d'entrée (i2) dudit étage de sortie (HB) et des bornes d'extrémité connectées à l'autre borne d'entrée (i1) de l'étage de sortie (HB) au moyen dudit circuit redresseur (D2, D3).

5. Circuit selon la revendication 4, dans lequel lesdits moyens d'alimentation en tension (B, V) comprennent un circuit élévateur de tension (V) comprenant un commutateur électronique (Q1) destiné à être commandé en mode ouvert/fermé, de telle manière que la tension délivrée à la sortie dudit circuit élévateur de tension (V) dépend du temps de conduction moyen dudit commutateur électronique (Q1), et dans lequel sont prévus des moyens (CC) destinés à commander la puissance délivrée à la lampe (L) ;
caractérisé en ce que lesdits moyens de commande comprennent un circuit de commande (CC) pouvant fonctionner pour appliquer à l'entrée de commande dudit commutateur électronique (Q1) un signal de commande de fréquence fixe et de cycle opératoire variable en fonction de la puissance qui doit être délivrée à la lampe (L).

6. Circuit selon la revendication 5, caractérisé en ce qu'il comprend des moyens de commande (CC) pouvant fonctionner pour appliquer aux entrées de commande des commutateurs électroniques (Q2, Q3) dudit inverseur (INV) des signaux de commande respectifs de fréquence fixe et de cycle opératoire constant.

7. Circuit selon la revendication 4, dans lequel lesdits moyens d'alimentation en tension (B, V) comprennent un circuit élévateur de tension (V) comprenant un commutateur électronique (Q1) destiné à être commandé en mode ouvert/fermé, de telle manière que la tension délivrée par ledit circuit élévateur de tension (V) dépend du temps de conduction moyen dudit commutateur électronique (Q1),
caractérisé en ce qu'il comprend des moyens de commande (CC) pouvant fonctionner pour appliquer au commutateur électronique (Q1) du circuit élévateur de tension (V) un signal de commande ayant une fréquence fixe et un cycle opératoire variable de manière à maintenir la tension délivrée par ledit circuit élévateur de tension (V) sensiblement constante.

8. Circuit selon la revendication 7, dans lequel sont prévus des moyens (CC) destinés à commander la puissance délivrée à la lampe (L),
caractérisé en ce que lesdits moyens de commande comprennent un circuit de commande (CC) pouvant fonctionner pour appliquer aux entrées de commande des commutateurs électroniques (Q2, Q3) dudit inverseur (INV) des signaux de commande de fréquence fixe respectifs ayant un cycle opératoire qui est variable en fonction de la puissance qui doit être délivrée à la lampe (L).

9. Circuit selon la revendication 4, caractérisé en ce que lesdits moyens d'alimentation en tension (B) comprennent une source de tension continue (B) et en ce que ledit étage intermédiaire comprend un inverseur (INV, figure 2) de type push-pull comprenant un transformateur (T) avec deux demi-enroulements primaires (W11, W12) ayant une borne centrale connectée à ladite source d'alimentation (B) par l'intermédiaire d'une inductance (L1) et deux bornes d'extrémité connectées au fil de terre (GND) par l'intermédiaire de premier et deuxième commutateurs électroniques (Q2, Q3), respectivement, et avec deux demi-enroulements secondaires (W21, W22) ayant une borne centrale connectée à une borne d'entrée (i2) de l'étage de sortie (HB) et deux bornes d'extrémité connectées audit circuit redresseur (D2, D3) ; un condensateur (C11) étant connecté entre les bornes d'entrée (i1, i2) dudit étage de sortie (HB).

10. Circuit selon la revendication 9, caractérisé par le fait qu'il comprend un circuit de commande (CC) pouvant fonctionner pour appliquer aux entrées de commande des commutateurs électroniques (Q2, Q3) de l'inverseur (INV) des signaux de commande d'onde carrée respectifs de fréquence fixe et de cycle opératoire variable, de manière à ne jamais ouvrir lesdits commutateurs électroniques (Q2, Q3) simultanément ; le cycle opératoire desdits signaux (V_{Q2}, V_{Q3}) étant variable en fonction de la puissance qui doit être délivrée à la lampe (L).

11. Circuit selon l'une quelconque des revendications 1 à 3, caractérisé par le fait que ledit inverseur (INV) comprend un circuit en pont en H (figures 3, 4) dont les bornes d'entrée sont connectées à la sortie de ladite alimentation en tension (B, V) et dont le bras central a un enroulement primaire (W1) d'un transformateur (T) qui a deux demi-enroulements secondaires (W21, W22) ayant une borne centrale connectée à une borne d'entrée (i2) de l'étage de sortie (HB) et des bornes d'extrémité connectées audit circuit redresseur (D2, D3), dont la sortie est connectée à l'autre borne d'entrée (i1) de l'étage de sortie (HB).

12. Circuit selon la revendication 11, dans lequel lesdits moyens d'alimentation en tension (B, V) comprennent un circuit élévateur de tension (V) comprenant un commutateur électronique (Q1) destiné à être commandé en mode ouvert/fermé, de telle manière que la tension délivrée à la sortie dudit circuit élévateur de tension (V) dépend du temps de conduction moyen dudit commutateur électronique (Q1), et dans lequel sont prévus des moyens de commande (CC) destinés à commander la puissance délivrée à la lampe (L) ;
caractérisé en ce que lesdits moyens de commande comprennent un circuit de commande (CC) pouvant fonctionner pour appliquer à l'entrée de commande dudit commutateur électronique (Q1) un signal de commande de fréquence fixe ayant un cycle opératoire variable en fonction de la puissance qui doit être délivrée à la lampe (L).

13. Circuit selon la revendication 12, caractérisé en ce qu'il comprend des moyens de commande (CC) pouvant fonctionner pour appliquer aux entrées de commande des commutateurs électroniques (Q2, Q3, Q4, Q5) dudit inverseur (INV) des signaux de commande respectifs à fréquence fixe et cycle opératoire constant.

14. Circuit selon la revendication 11, dans lequel lesdits moyens d'alimentation en tension (B, V) comprennent un circuit élévateur de tension (V) comprenant un commutateur électronique (Q1) destiné à être commandé en mode ouvert/fermé, de telle manière que la tension délivrée par ledit circuit élévateur de tension (V) dépend du temps de conduction moyen dudit commutateur électronique (Q1),
caractérisé en ce qu'il comprend des moyens de commande (CC) pouvant fonctionner pour appliquer au commutateur électronique (Q1) du circuit élévateur de tension (V) un signal de commande de fréquence fixe ayant un cycle opératoire variable, de manière à maintenir la tension délivrée par ledit circuit élévateur de tension (V) sensiblement constante.

15. Circuit selon la revendication 14, dans lequel sont prévus des moyens de commande (CC) destinés à commander la puissance délivrée à la lampe (L),
caractérisé en ce que lesdits moyens de commande comprennent un circuit de commande (CC) pouvant fonctionner pour appliquer aux entrées de commande des commutateurs électroniques (Q2, Q3, Q4, Q5) dudit inverseur (INV) des signaux de commande respectifs de fréquence fixe ayant un cycle opératoire variable en fonction de la puissance qui doit être délivrée à la lampe (L).

16. Circuit selon la revendication 11, caractérisé en ce que lesdits moyens d'alimentation en tension (B) comprennent une source de tension continue (B) et en ce que ledit inverseur comprend un circuit en pont en H (figure 4) dont les bornes d'entrée sont connectées à ladite source de tension (B) par l'intermédiaire d'une inductance (L1) et dont le bras central a un enroulement primaire (W1) d'un transformateur (T) disposé à l'intérieur de celui-ci, lequel transformateur a deux demi-enroulements secondaires (W21, W22) ayant une borne centrale connectée à une borne d'entrée (i2) de l'étage de sortie (HB) et des bornes d'extrémité connectées audit circuit redresseur (D2, D3), dont la sortie est à son tour connectée à l'autre borne d'entrée (il) de l'étage de sortie (HB) ; un condensateur (C11) étant connecté entre la borne centrale des demi-enroulements secondaires (W21, W22) du transformateur (T) et la sortie du circuit redresseur (D2, D3).

17. Circuit selon la revendication 13, dans lequel le circuit en pont en H de l'inverseur (INV) comprend des premier et deuxième commutateurs électroniques (Q2, Q4) entre la sortie du circuit élévateur de tension (V) et les bornes de l'enroulement primaire (W1) du transformateur (T) et des troisième et quatrième commutateurs électroniques (Q3, Q5) entre les bornes dudit enroulement primaire (W1) et le fil de terre (GND) ; le premier (deuxième) et le quatrième (troisième) commutateurs électroniques étant disposés en diagonale l'un par rapport à l'autre ; et dans lequel sont prévus des moyens destinés à commander la puissance délivrée à la lampe (L) ;
caractérisé en ce que lesdits moyens de commande comprennent un circuit de commande pouvant fonctionner pour appliquer aux entrées de commande desdits premier (troisième) et deuxième (quatrième) commutateurs du circuit en pont de l'inverseur (INV) des signaux de commande d'onde carrée complémentaires (V_{Q2}, V_{Q4}) ; les signaux de commande appliqués aux premier et troisième commutateurs électroniques étant déphasés l'un par rapport à l'autre d'une quantité variable en fonction de la puissance qui doit être délivrée à la lampe (L).

18. Circuit selon l'une quelconque des revendications 1 à 3, caractérisé en ce que l'inverseur (INV) est de type "direct" et comprend un transformateur (T) avec un enroulement primaire (W1) connecté en série à un commutateur électronique (Q2) entre la sortie desdits moyens d'alimentation en tension (B, V) et ledit fil de terre (GND), et avec un enroulement secondaire (W2) connecté à un circuit redresseur (D2, D3) connecté à son tour à l'étage de sortie (HB), et un autre enroulement (W3) connecté en série à une diode (D4) entre la sortie du circuit élévateur de tension (V) et le fil de terre (GND) pour permettre l'écoulement du courant de magnétisation provenant de l'enroulement primaire (W1) chaque fois que ledit commutateur électronique (Q2) est ouvert.

19. Circuit selon la revendication 18, dans lequel lesdits moyens d'alimentation en tension (B, V) comprennent un circuit élévateur de tension (V) comprenant un commutateur électronique (Q1) destiné à être commandé en mode ouvert/fermé, de telle manière que la tension délivrée à la sortie du circuit élévateur de tension (V) dépend du temps de conduction moyen dudit commutateur électronique (Q1), et dans lequel sont prévus des moyens de commande (CC) destinés à commander la puissance délivrée à la lampe (L) ;
caractérisé en ce que lesdits moyens de commande comprennent un circuit de commande (CC) pouvant fonctionner pour appliquer à l'entrée de commande dudit commutateur électronique (Q1) un signal de commande de fréquence fixe ayant un cycle opératoire variable en fonction de la puissance délivrée à la lampe (L).

20. Circuit selon la revendication 19, caractérisé en ce qu'il comprend des moyens de commande (CC) pouvant fonctionner pour appliquer au commutateur électronique (Q2) de l'inverseur (INV) un signal de commande d'onde carrée de fréquence fixe ayant un cycle opératoire constant.

21. Circuit selon la revendication 18, dans lequel sont prévus des moyens (CC) destinés à commander la puissance délivrée à la lampe (L), caractérisé en ce que lesdits moyens de commande comprennent un circuit de commande (CC) pouvant fonctionner pour appliquer à l'entrée du commutateur électronique (Q2) de l'inverseur (INV) un signal de commande d'onde carrée de fréquence fixe ayant un cycle opératoire variable en fonction de la puissance qui doit être délivrée à la lampe (L).

22. Circuit selon la revendication 21, dans lequel lesdits moyens d'alimentation en tension (B, V) comprennent un circuit élévateur de tension (V) comprenant un commutateur électronique (Q1) destiné à être commandé en mode ouvert/fermé, de telle manière que la tension délivrée par ledit circuit élévateur de tension (V) dépend du temps de conduction moyen dudit commutateur électronique (Q1),
caractérisé en ce qu'il comprend des moyens de commande (CC) pouvant fonctionner pour appliquer au commutateur électronique (Q1) du circuit élévateur de tension (V) un signal de commande de fréquence fixe ayant un cycle opératoire variable, de manière à maintenir la tension délivrée par ledit circuit élévateur de tension (V) sensiblement constante.

23. Circuit selon l'une quelconque des revendications 1 à 3, caractérisé en ce que lesdits moyens d'alimentation en tension (B) comprennent une source de tension continue (B) et en ce que ledit étage intermédiaire comprend un transformateur (T) avec un enroulement primaire (W1) qui a une première borne connectée par l'intermédiaire d'une inductance (L1) à ladite source (B) et une deuxième borne connectée au fil de terre (GND) par l'intermédiaire du premier commutateur électronique (Q2), et un enroulement secondaire (W2) ayant une première borne connectée à une borne d'entrée (i1) de l'étage de sortie (HB) par l'intermédiaire d'un premier redresseur (D2) et l'autre borne connectée à l'autre borne d'entrée (i2) de l'étage de sortie (HB) ; un autre enroulement (W3) étant disposé entre les bornes d'entrée (i1, i2) de l'étage de sortie (HB), enroulement auquel une diode (D4) est connectée en série ; un deuxième commutateur électronique (Q1) étant disposé entre la première borne de l'enroulement primaire (W1) du transformateur (T) et le fil de terre (GND) ;
un circuit de commande (CC) étant prévu afin de délivrer aux entrées de commande desdits premier et deuxième commutateurs électroniques (Q2, Q1), respectivement, des signaux d'onde carrée de fréquence fixe complémentaires respectifs avec des cycles opératoires respectifs variables en fonction de la puissance qui doit être délivrée à la lampe (L).

24. Circuit selon l'une quelconque des revendications 1 à 3, caractérisé en ce que ledit inverseur (INV) est de type "à retour de faisceau" (figures 7 et 8) et comprend un transformateur (T) ayant un enroulement primaire (W1) avec une borne connectée à la sortie desdits moyens d'alimentation en tension (B, V) et l'autre borne connectée au fil de terre (GND) par l'intermédiaire d'un commutateur électronique (Q2), et un enroulement secondaire (W2) ayant une borne connectée à une borne d'entrée (i2) de l'étage de sortie (HB) et l'autre borne connectée à l'autre borne d'entrée (i1) de l'étage de sortie (HB) par l'intermédiaire d'un redresseur (D2).

25. Circuit selon la revendication 24, dans lequel lesdits moyens d'alimentation en tension (B, V) comprennent un circuit élévateur de tension (V) comprenant un commutateur électronique (Q1) destiné à être commandé en mode ouvert/fermé, de telle manière que la tension délivrée à la sortie dudit circuit élévateur de tension (V) dépend du temps de conduction moyen dudit commutateur électronique (Q1), et dans lequel sont prévus des moyens de commande (CC) destinés à commander la puissance délivrée à la lampe (L) ;
caractérisé en ce que lesdits moyens de commande comprennent un circuit de commande (CC) pouvant fonctionner pour appliquer à l'entrée de commande dudit commutateur électronique (Q1) un signal de commande de fréquence fixe ayant un cycle opératoire variable en fonction de la puissance qui doit être délivrée à la lampe (L).

26. Circuit selon la revendication 24, caractérisé en ce qu'il comprend des moyens de commande (CC) pouvant fonctionner pour appliquer à l'entrée de commande du commutateur électronique (Q2) dudit inverseur (INV) un signal de commande de fréquence fixe ayant un cycle opératoire constant.

27. Circuit selon la revendication 24, dans lequel lesdits moyens d'alimentation en tension (B, V) comprennent un circuit élévateur de tension (V) comprenant un commutateur électronique (Q1) destiné à être commandé en mode ouvert/fermé, de telle manière que la tension délivrée par ledit circuit élévateur de tension (V) dépend du temps de conduction moyen dudit commutateur électronique (Q1),
caractérisé en ce qu'il comprend des moyens de commande (CC) pouvant fonctionner pour appliquer au commutateur électronique (Q1) du circuit élévateur de tension (V) un signal de commande de fréquence fixe ayant un cycle opératoire variable, de manière à maintenir la tension délivrée par ledit circuit élévateur de tension (V) sensiblement constante.

28. Circuit selon la revendication 27, dans lequel sont prévus des moyens de commande (CC) destinés à commander la puissance délivrée à la lampe (L), caractérisé en ce que lesdits moyens de commande comprennent un circuit de commande (CC) pouvant fonctionner pour appliquer aux entrées de commande du commutateur électronique (Q2) dudit inverseur (INV) un signal de commande de fréquence fixe ayant un cycle opératoire variable en fonction de la puissance qui doit être délivrée à la lampe (L).

29. Circuit selon l'une quelconque des revendications 1 à 3, caractérisé en ce que ledit inverseur (INV) est de type "direct" (figure 8) et comprend
- un transformateur (T) avec un enroulement primaire (W1) disposé entre deux commutateurs électroniques (Q2, Q3) dans une branche de circuit connectée entre la sortie desdits moyens d'alimentation en tension (B, V) et le fil de terre (GND), et ayant un enroulement secondaire (W2) connecté aux bornes d'entrée (i1, i2) de l'étage de sortie (HB) par l'intermédiaire d'un circuit redresseur (D2, D3) ;
- des premier et deuxième redresseurs (D5, D6) connectés respectivement entre une borne de l'enroulement primaire (W1) et la sortie des moyens d'alimentation en tension (V), et entre l'autre borne de l'enroulement primaire (W1) et le fil de terre (GND), pour permettre l'écoulement inverse du courant de magnétisation provenant de cet enroulement primaire (W1) lorsque lesdits commutateurs électroniques (Q2, Q3) sont ouverts.

30. Circuit selon la revendication 29, dans lequel lesdits moyens d'alimentation en tension (B, V) comprennent un circuit élévateur de tension (V) comprenant un commutateur électronique (Q1) destiné à être commandé en mode ouvert/fermé, de telle manière que la tension délivrée à la sortie dudit circuit élévateur de tension (V) dépend du temps de conduction moyen dudit commutateur électronique (Q1), et dans lequel sont prévus des moyens de commande (CC) destinés à commander la puissance délivrée à la lampe (L) ;
caractérisé en ce que lesdits moyens de commande comprennent un circuit de commande (CC) pouvant fonctionner pour appliquer à l'entrée de commande dudit commutateur électronique (Q1) un signal de commande de fréquence fixe ayant un cycle opératoire variable en fonction de la puissance qui doit être délivrée à la lampe (L).

31. Circuit selon la revendication 30, caractérisé en ce qu'il comprend des moyens de commande (CC) pouvant fonctionner pour appliquer aux entrées de commande des commutateurs électroniques (Q2, Q3) dudit inverseur (INV) des signaux de commande respectifs de fréquence fixe et de cycle opératoire constant.

32. Circuit selon la revendication 29, dans lequel lesdits moyens d'alimentation en tension (B, V) comprennent un circuit élévateur de tension (V) comprenant un commutateur électronique (Q1) destiné à être commandé en mode ouvert/fermé, de telle manière que la tension délivrée par ledit circuit élévateur de tension (V) dépend du temps de conduction moyen dudit commutateur électronique (Q1),
caractérisé en ce qu'il comprend des moyens de commande (CC) pouvant fonctionner pour appliquer au commutateur électronique (Q1) du circuit élévateur de tension (V) un signal de commande de fréquence fixe ayant un cycle opératoire variable, de manière à maintenir la tension délivrée par ledit circuit élévateur de tension (V) sensiblement constante.

33. Circuit selon la revendication 32, dans lequel sont prévus des moyens de commande (CC) destinés à commander la puissance délivrée à la lampe (L),
caractérisé en ce que lesdits moyens de commande comprennent un circuit de commande (CC) pouvant fonctionner pour appliquer aux entrées de commande des commutateurs électroniques (Q2, Q3) dudit inverseur (INV) des signaux de commande respectifs de fréquence fixe ayant un cycle opératoire variable en fonction de la puissance qui doit être délivrée à la lampe (L).

34. Circuit selon l'une quelconque des revendications 1 à 3, caractérisé en ce que ledit inverseur (INV) est de type demi-pont (figure 9) et comprend un transformateur (T) ayant un enroulement primaire (W1) avec une borne connectée à un diviseur de tension capacitive (C4, C5) intercalé entre la sortie desdits moyens d'alimentation en tension (B, V) et le fil de terre (GND) et l'autre borne connectée à la jonction entre deux commutateurs électroniques (Q2, Q3) disposés dans une branche de circuit en parallèle avec ledit diviseur de tension capacitive (C4, C5) ; et deux demi-enroulements secondaires (W21, W22) connectés aux bornes d'entrée (i1, i2) de l'étage de sortie (HB) par l'intermédiaire d'un circuit redresseur (D2, D3).

35. Circuit selon la revendication 34, dans lequel lesdits moyens d'alimentation en tension (B, V) comprennent un circuit élévateur de tension (V) comprenant un commutateur électronique (Q1) destiné à être commandé en mode ouvert/fermé, de telle manière que la tension délivrée à la sortie dudit circuit élévateur de tension (V) dépend du temps de conduction moyen dudit commutateur électronique (Q1), et dans lequel sont prévus des moyens de commande (CC) destinés à commander la puissance délivrée à la lampe (L) ;
caractérisé en ce que lesdits moyens de commande comprennent un circuit de commande (CC) adapté pour appliquer à l'entrée de commande dudit commutateur électronique (Q1) un signal de commande de fréquence fixe ayant un cycle opératoire variable en fonction de la puissance qui doit être délivrée à la lampe (L).

36. Circuit selon la revendication 34, caractérisé en ce qu'il comprend des moyens de commande (CC) pouvant fonctionner pour appliquer aux entrées de commande des commutateurs électroniques (Q2, Q3) dudit inverseur (INV) des signaux de commande respectifs de fréquence fixe ayant un cycle opératoire constant.

37. Circuit selon la revendication 34, dans lequel lesdits moyens d'alimentation en tension (B, V) comprennent un circuit élévateur de tension (V) comprenant un commutateur électronique (Q1) destiné à être commandé en mode ouvert/fermé, de telle manière que la tension délivrée par ledit circuit élévateur de tension (V) dépend du temps de conduction moyen dudit commutateur électronique (Q1),
caractérisé en ce qu'il comprend des moyens de commande (CC) pouvant fonctionner pour appliquer au commutateur électronique (Q1) du circuit élévateur de tension (V) un signal de commande de fréquence fixe ayant un cycle opératoire variable de manière à maintenir la tension délivrée par ledit circuit élévateur de tension (V) sensiblement constante.

38. Circuit selon la revendication 37, dans lequel sont prévus des moyens de commande (CC) destinés à commander la puissance délivrée à la lampe (L),
caractérisé en ce que lesdits moyens de commande comprennent un circuit de commande (CC) pouvant fonctionner pour appliquer aux entrées de commande des commutateurs électroniques (Q2, Q3) dudit inverseur (INV) des signaux de commande respectifs de fréquence fixe ayant un cycle opératoire variable en fonction de la puissance qui doit être délivrée à la lampe (L).

39. Circuit selon l'une quelconque des revendications précédentes, caractérisé en ce que lesdits moyens de démarreur comprennent un circuit résonnant LC haute fréquence (LX, C10) comprenant un condensateur (C10) en parallèle avec la lampe (L) et une inductance (LX) de type à air connectée en série avec la lampe (L).
